# EUROPEAN PATENT APPLICATION

(11) **EP 4 600 586 A2**
(43) Date of publication of application: **13.08.2025**
(21) Application number: 25185404.8
(22) Date of filing: 22.05.2023
(51) Int. Cl.: F25B 45/00

(54) **SYSTEMS, EQUIPMENT AND METHODS FOR STABILIZING HYDROFLUOROOLEFINS IN REFRIGERANT SYSTEMS**

(30) Priority: 23.05.2022 US 202263344885 P; 04.11.2022 US 202263422670 P
(62) Divisional of application: 23732279.7
(71) Applicant: The Chemours Company FC, LLC, Wilmington, Delaware 19801 (US)
(72) Inventor: Snyder, David Matthew, Drexel Hill 19026 (US); Hughes, Joshua, Wilmington 19810 (US); Haviland Minor, Barbara, The Villages 32163 (US); Peng, Sheng, Hockessin 19707 (US); Pansulla, Andrew R., West Chester 19380 (US); Stasio, Anthony F., Newark 19711 (US)
(74) Representative: Abitz & Partner

(57) **Abstract**

The present invention relates to system, equipment and methods for preparing and charging a refrigerant circuit with either (1) a fluoroolefin refrigerant compositions stabilized with an inhibitor agent which prevents or reduce oligomerization or polymerization of the fluoroolefin component of the composition or (2) a purified fluoroolefin refrigerant compositions by removing the inhibitor agent, and/or maintaining the integrity of fluoroolefin refrigerant compositions in refrigeration equipment by circulating the fluoroolefin refrigerant compositions in the refrigerant equipment through or more columns or devices to remove at least one of oxygen and oxygen containing contaminants, moisture/water, oligomerization/polymerization by-products.

## Description

### BACKGROUND OF THE INVENTION

### Field of the Invention

The present invention relates to versatile systems and methods capable of stabilizing and/or purifying fluoroolefin refrigerants or heat transfer compositions for refrigerant or heat transfer equipment, and maintaining the stability/integrity of a fluoroolefin refrigerant composition or fluoroolefin heat transfer composition used in refrigeration or heat transfer equipment where the fluoroolefin is susceptible to oligomerization or polymerization in the presence of air, oxygen, and/or oxidizing compounds or contaminants.

### Description of Related Art

Heat transfer fluids or refrigerants comprised of 2,3,3,3-tetrafluoropropene (HFO-1234yf) involve stable molecules under heat transfer or refrigeration usage conditions. However, HFO-1234yf can oligomerize or homopolymerize in the presence of air and oxidizing chemicals during storage and/or use. It has also been observed that under abnormal conditions, such as extreme temperatures or when in contact with other compounds in a contaminated system (e.g., excessive oxygen, oxidizing chemicals, or radical generating compounds, among various contaminants) that might occur unexpectedly in a particular use and/or application, certain fluoroolefins can exhibit degradation and/or produce by-products that should be removed. This degradation may occur by any number of different mechanisms.

One solution has been to provide stabilized compositions as disclosed in JP 2009298918; US 6,969,701; US 8,133,407; US 2006/0022166; US 2006/0043330; US 2008/0157022; and WO 2007/126760 as well as EP 2057245; US 8101094; US 8535555; US8097181; and US 8075796; each disclosure of which is hereby incorporated herein by reference in its entirety.

Another solution has been proposed where the fluoroolefin containing composition, e.g., 2,3,3,3-tetrfluoropropene, is modified to include an effective amount of an oligomerization/polymerization inhibitor comprising at least one of limonene, α-terpinene, α-tocopherol, butylated hydroxytoluene, 4-methoxyphenol, and benzene-1,4-diol as disclosed in each of U.S. Patent Publication Nos. US20210108119 and US202100430368, each disclosure of which is hereby incorporated herein by reference in its entirety. However, while these inhibitor compounds effectively react with oxygen and/or function as chain transfer agents to terminate polymer chain propagation because of the fluoroolefin, their presence may also reduce the purity of the refrigerant going to the heat transfer system, e.g., refrigerant system.

Thus, there is a need for an alternative approach for inhibiting oligomerization/polymerization of the fluoroolefin component of refrigerant/heat transfer compositions in heat transfer/refrigeration systems and equipment in order to maintain the integrity of the systems and the fluoroolefin containing composition whether or not an oligomer/polymer inhibitor is added or present.

### SUMMARY OF THE INVENTION

The present invention relates to systems, equipment and methods inhibiting oligomerization/polymerization of the fluoroolefin component of refrigerant/heat transfer compositions in heat transfer/refrigeration systems and equipment in order to maintain the integrity of the systems and the fluoroolefin containing composition whether or not an oligomer/polymer inhibitor is present.

The present invention relates to systems, equipment, kits and (1) methods for preparing and charging a refrigerant circuit with either a fluoroolefin refrigerant compositions stabilized with an inhibitor agent which prevents or reduces oligomerization or polymerization of the fluoroolefin component of the composition, or (2) methods for preparing and charging a fluoroolefin refrigerant composition free of oligomerization or polymerization inhibitor to a system designed to maintain the integrity of fluoroolefin refrigerant composition and system by circulating the fluoroolefin refrigerant composition through one or more treatment zones which eliminate/remove oxygen or oxidizing contamination, eliminate/remove moisture, and eliminate or remove oligomer/polymer products and by-product, optionally configured to receive a pressurized source of an inhibitor containing fluoroolefin composition charge containing an effective amount of inhibitor.

The present invention provides versatile systems, retrofits and methods that can eliminate or reduce undesirable oligomerization / polymerization of the fluoroolefin component(s) of a heat transfer/refrigerant composition by optionally adding an effective amount of an oligomerization / polymerization inhibitor up to 1 weight percent (wt.% or mass%), more specifically 0.02 to 0.5 weight percent, to a refrigerant circuit containing various treatment stages to remove oxygen and oxygen containing contaminants, remove moisture, and/or remove any *in situ* generated oligomerization or polymerization by-products through which the fluoroolefin refrigerant composition passes, where the fluoroolefin composition comprises containing HFO-1234yf, optionally containing at least one of R-32, R-125, R-152a, R-E-HFO-1234ze, R-134a, R-227ea, R-E/Z-1336mzz, CO₂, R-E/Z-1132, R-1132a.

Disclosed herein are fluoroolefin containing compositions obtained from a storage tank, vessel, container or cannister containing HFO-1234yf, optionally containing at least one of R-32, R-125, R-E-HFO-1234ze, R-134a, R-227ea, R-E-1336mzz, CO₂, R-E/Z-1132, R-1132a, R-152a, which are passed through a cartridge filled with at least one oligomerization/polymerization inhibitor, such as, limonene, terpinenes, pinene, at a rate sufficient to add an effective amount of the inhibitor sufficient to prevent at least HFO-1234yf from oligomerizing/polymerizing, which can then be charged to the refrigerant/heat transfer system/equipment.

Disclosed herein are kits containing a pressurized cannister of a fluoroolefin containing compositions comprising HFO-1234yf, optionally containing at least one of R-32, R-125, R-152a, R-E/Z-HFO-1234ze, R-134a, R-227ea, R-E/Z-1336mzz, CO₂, R-E/Z-1132, and R-1132a, and a cartridge filled with at least one oligomerization/polymerization inhibitor, such as, limonenes, terpinenes, pinenes, e.g., oxidation product inhibitors, to add an effective amount of the inhibitor to prevent at least HFO-1234yf from oligomerizing/polymerizing.

Disclosed herein are kits containing a pressurized cannister of a fluoroolefin containing composition comprising a lubricant and at least one oligomerization/polymerization inhibitor selected from (1) d-limonene, I-limonene, β-pinene, α-pinene, α-terpinene, β-terpinene, γ-terpinene, and δ-terpinene, and mixtures of two or more, and (2) ethane, propane, cyclopropane, propylene, butane, butene, isobutane, isobutene, 2-methylbutane, meta-, ortho- or para- xylene, alpha, methyl styrene; alpha, 2-dimethyl styrene; alpha, 3-dimethyl styrene; or alpha, 4-dimethyl styrene, in amounts of about 0.02 to about 0.3 ppm to prevent at least HFO-1234yf from oligomerizing/polymerizing.

Disclosed herein are HFO-1234yf fluoroolefin containing compositions containing one or more of limonene, terpinenes, pinene, i.e., oxidation product inhibitors wherein a column is used to remove the inhibitor and produce a pure stream of the HFO-1234yf fluoroolefin containing composition which is then charged to the heat transfer/refrigeration equipment.

Disclosed herein are versatile systems, retrofits and methods which maintain the integrity of the refrigerant circulating through the refrigerant equipment, whether or not they are being charged with a stabilized or purified HFO-1234yf containing fluoroolefin composition, by reducing, avoiding, eliminating and removing oligomerization/homopolymerization generating materials and oligomer/polymer by-products in a circulating HFO-1234yf containing fluoroolefin composition through the use of one or more oxygen/air/oxygen containing/oxidizing contaminant removing columns, water/moisture removing driers, one or more systems that remove and/or reduce oligomerization / polymerization by-products.

Disclosed herein are systems, components and methods which prevent and/or reduce undesirable oligomerization / polymerization fluoroolefin by-products of a fluoroolefin containing refrigerant by adding an effective amount of oligomer/polymer inhibitor comprising at least one of terpenes, terpenoid, terpinenes, linear unsaturated hydrocarbons, and mixtures of two or more to the fluoroolefin containing refrigerant before charging it to the refrigerant equipment. The equipment is new, existing, or retrofitted to include one or more oxygen/air/oxygen containing/oxidizing contaminant removing columns, water/moisture removing driers, one or more systems that remove and/or reduce oligomerization / polymerization by-products in the circulating HFO-1234yf containing fluoroolefin composition fluid of the equipment or systems.

Disclosed herein are methods and systems including one or more oxygen/air/oxygen containing/oxidizing contaminant removing columns using a supported or unsupported deoxygenation agent which reacts with or removes oxygen/air/oxygen containing/oxidizing compounds which facilitate oligomerization / polymerization of the fluoroolefin component of a refrigerant composition circulating in refrigeration equipment without C-F bond cleavage of the fluoroolefin.

Disclosed herein are systems and method of using devices or columns filled with deoxygenation reagents suitable for removing oxygen from fluoroolefin-containing mixtures optionally at room temperature, e.g., 20° to 30°C, which include, but are not limited to zero valent or low valent transition metals, and reduced oxides of transitions metals where the transition is selected from the group comprising Cu, Ti, V, Mn, Fe, Co, Zn, Ni, and Pd. The zero valent or low valent transition metals and reduced oxides of transitions metals may be obtained commercially or may be prepared by heating a transition metal oxide in the presence of a reducing agent such as hydrogen at an elevated temperature (100°C to 300°C) in a vessel such as a tube or column. Examples of metal oxides suitable for reduction in this manner include, but are not limited to CuO, TiO₂, V₂O₅, Mn₂O₃, Fe₂O₃, Co₃O₄, ZnO, NiO, and PdO. Other deoxygenation reagents include solutions of ascorbic acid salts, NaHSO₄, Na₂SO₃, Na₂S₂O₅, Na₂S₂O₃, Na₂S₂O₂, polyhydroxy benzene compounds such as pyrogallol; Ti (III) salts, Cr (II) salts, Sn (II) salts, Fe (II) salts; nitrite salts, and hypophosphite salts.

Oxygen removal from fluoroolefin compositions may be conducted by passing the fluoroolefin mixture through a column or bed of deoxygenation reagent at 20°C to 30°C without C-F bond cleavage of at least the HFO-1234yf fluoroolefin component of the composition.

Disclosed herein are versatile systems, retrofits and methods that can: (1) eliminate or reduce undesirable oligomerization / polymerization of the fluoroolefin component(s) of a refrigerant by adding an effective amount of oligomer/polymer inhibitor to sources of heat transfer/refrigerant or refrigerant compositions or blends, e.g., storage vessels such as containers, tanks or cannisters, before charging a heat transfer/refrigerant system or heat transfer/refrigeration circuit; or (2) remove an inhibitor from stabilized heat transfer/refrigerant contained in storage tanks, containers, or cannisters to provide a pure, substantially inhibitor free, heat transfer/refrigerant composition which is to be added to a new, existing, or retrofitted heat transfer/refrigerant systems or circuits which include devices to eliminate, remove or reduce oxygen/air, moisture, oligomer/polymer by-products in the circulating fluid of the heat transfer/refrigeration circuit through the use of one or more filters and/or separators, optionally provided with a fresh source of stabilized refrigerant or refrigerant composition blend.

Also disclosed herein are systems and methods for preventing and/or reducing formation of oligomer and homopolymer products and by-products and adapted to add an effective amount of at least one oligomerization/polymerization inhibitor to a source of a fluoroolefin containing heat transfer/refrigerant composition or a circulating fluoroolefin heat transfer/refrigerant composition, wherein the inhibitor is selected from one of d-limonene, I-limonene, β-pinene, α-pinene, α-terpinene, β-terpinene, γ-terpinene, and δ-terpinene, and mixtures of two or more thereof.

Also disclosed herein are systems and dispensing techniques by which at least one of d-limonene, I-limonene, β-pinene, α-pinene, α-terpinene, β-terpinene, γ-terpinene, and δ-terpinene, and mixtures of two or more thereof, is dispensed/metered into a flowing stream of a 2,3,3,4-tetrafluoropropene containing composition to stabilize the composition against oligomerization and/or polymerization.

Also disclosed herein are methods and devices for providing a flowable supply of a fluoroolefin heat transfer/refrigerant composition stabilized with an effective amount of at least one of d-limonene, I-limonene, β-pinene, α-pinene, α-terpinene, β-terpinene, γ-terpinene, and δ-terpinene, and mixtures of two or more thereof, inhibitors for charging a refrigerant system.

Also disclosed herein is a system comprising a kit including prepackaged/self-contained supply of a composition comprising at least HFO-1234yf and optionally at least one additional refrigerant selected from the HFO-1234ze, HFC-32, HFC-125, HFC-134a, HFC-152a, E/Z-HFO-1132, HFO-1132a and CO₂ and inhibitor containing cartridge, which includes carrier supported or unsupported oligomer inhibitor such as d-limonene, I-limonene, α-pinene, β-pinene, α-terpinene, β-terpinene, γ-terpinene, and δ-terpinene, and mixtures of two or more, or the inhibitor can be added to or formulated with the lubricant for use during an oil change. Lubricant facilitates the addition of higher concentrations of inhibitor.

In one embodiment of the invention, the kit comprises a prepackaged/self-contained supply of a lubricant and an inhibitor which comprises d-limonene, l-limonene, α-pinene, β-pinene, α-terpinene, β-terpinene, γ-terpinene, and δ-terpinene, and mixtures of two or more or ethane, propane, cyclopropane, propylene, butane, butene, isobutane, isobutene, 2-methylbutane, meta-, ortho- or para- xylene, one of alpha, methyl styrene; alpha, 2-dimethyl styrene; alpha, 3-dimethyl styrene; or alpha, 4-dimethyl styrene.

In another one embodiment of the invention, the kit comprises a prepackaged/self-contained supply of a lubricant and a cartridge filled with an inhibitor which comprises d-limonene, I-limonene, α-pinene, β-pinene, α-terpinene, β-terpinene, γ-terpinene, and δ-terpinene, and mixtures of two or more, or ethane, propane, cyclopropane, propylene butane, butene, isobutane, isobutene, meta-, ortho- or para- xylene, one of alpha (α)-methylene styrene, alpha, methyl styrene; alpha, 2-dimethyl styrene; alpha, 3-dimethyl styrene; or alpha, 4-dimethyl styrene , which can be added to the lubricant during an oil change for the refrigerant circuit.

Also disclosed herein is a system comprising a kit including prepackaged/self-contained supply of HFO-1234yf containing composition, a lubricant and an inhibitor which comprises d-limonene, I-limonene, α-pinene, β-pinene, α-terpinene, β-terpinene, γ-terpinene, and δ-terpinene, and mixtures of two or more, or a supply of a lubricant and cartridge adapted to add an inhibitor which comprises d-limonene, I-limonene, α-pinene, β-pinene, α-terpinene, β-terpinene, γ-terpinene, and δ-terpinene, and mixtures of two or more, or ethane, propane, cyclopropane, propylene, butane, butene, isobutane, isobutene, 2-methylbutane, meta-, ortho- or para- xylene, one of alpha , methyl styrene; alpha, 2-dimethyl styrene; alpha, 3-dimethyl styrene; or alpha, 4-dimethyl styrene during an oil change.

Also disclosed herein are system equipment comprising a refrigeration circuit for conveying a fluoroolefin refrigerant composition including at least one compressor, at least one evaporator, at least one condenser, at least one expansion device which is an orifice, capillary tube or an expansion valve, at least one drier for removing moisture, and optionally at least one of: at least one service valve; a stabilized refrigerant charging subsystem or kit; a purified refrigerant charging subsystem; a subsystem for separating oligomer/polymer; and an oligomer/polymer filter.

Also disclosed herein are systems comprising a refrigeration circuit for circulating a fluoroolefin refrigerant composition including a compressor, an evaporator, a condenser, a drier for removing moisture or water which include a filter section and a drier section, and a stabilized refrigerant charging subsystem.

Also disclosed herein are systems comprising a refrigeration circuit for conveying a fluoroolefin refrigerant composition including a compressor, an evaporator, a condenser, a drier for removing moisture or water, and a purified refrigerant charging subsystem, and optionally a stabilized refrigerant charging subsystem.

Also disclosed herein are systems comprising a refrigeration circuit for conveying a fluoroolefin refrigerant composition including a compressor, an evaporator, a condenser, at least one drier for removing moisture or water, at least one subsystem for (1) removing oxygen and/or oxidizing compounds including a deoxygenating agent and/or (2) separating oligomer/polymer comprising an oligomer/polymer filter, where an air or oxygen detector or sensor is associated with the vapor space of the refrigerant in a container or a portion of the refrigeration circuit to control use of the deoxygenating agent.

Also disclosed herein are the combination of any of the disclosed devices, systems and uses thereof and transport assembly or service facilities for automobiles, trucks, railcars or other transportation systems, any moving carrier, known as "intermodal" systems, such as intermodal systems include "containers" (combined sea/land transport) as well as "swap bodies" (combined road and rail transport).

### BRIEF DESCRIPTION OF THE DRAWINGS

Fig. 1 illustrates a first embodiment depicting a system for providing an inhibitor containing fluoroolefin composition to a refrigeration circuit.
Fig. 2 illustrates a system for removing the inhibitor from a fluoroolefin composition and charging the purified fluoroolefin composition to a refrigeration circuit.
Fig. 3 illustrates a refrigeration circuit which includes stand-alone columns for O₂ /oxidizing contaminants removal, moisture removal, and an oligomer/polymer by-product removal.
Fig. 4 illustrates a refrigerant circuit including an integrated oil separator/polymer filter for oil within the compressor discharge line being returned to the compressor.
Fig. 5 illustrates an integrated oil/polymer filter for the flow of compressor oil from the compressor oil sump to the compressor lubrication surfaces via shaft driven or and external oil pump.
Fig. 6 illustrates a stabilizer injection kit for systems running on Opteon^{™} products and for dosing additional stabilizer into a system that is already charged with a refrigerant composition.

### DETAILED DESCRIPTION OF THE INVENTION

The foregoing summary and the following detailed description are exemplary and explanatory only and are not restrictive of the invention, as defined in the appended claims. Other features and benefits of any one or more of the embodiments will be apparent from the following detailed description, and from the claims.

Refrigerants like the fluoroolefin HFO-1234yf are stable molecules under normal refrigeration usage conditions. However, 2,3,3,3-terafluoropropene (HFO-1234yf, R-1234yf or 1234yf) can oligomerize or homopolymerize in the presence of air/oxygen, oxidizing chemicals, or radical generating compounds, among various contaminants during storage. It has also been observed that certain fluoroolefins, e.g., HFO-1234yf can exhibit degradation and/or produce oligomer/polymer by-products under abnormal conditions such as extreme temperatures or contact with other compounds in a contaminated system (e.g., excessive oxygen, oxidizing chemicals, or radical generating compounds, among various contaminants) that might occur unexpectedly in a particular use and/or application and preferably should be removed using a subsystem containing a deoxygenating agent which can respond to a sensor detection of air/oxygen . Such degradation may occur during storage or transport, or when fluoroolefins are utilized as refrigerants or heat transfer fluids. One solution of avoiding the by-product formation from oligomerization/homopolymerization/polymerization is to use various inhibitors like terpenes, terpenoid, terpinenes, linear unsaturated hydrocarbon, such as those disclosed in commonly owned U. S. Patent Publication Nos. 20210108119 and 2021004036, each disclosure of which is hereby incorporated herein by reference in its entirety, which stabilize the hydrofluoroolefins component, e.g., HFO-1234yf from oligomerization/homopolymerization/polymerization.

Before addressing details of embodiments described herein, some terms are defined or clarified as follows.

As used herein, a refrigerant is a compound or mixture or blend of compounds, e.g., a refrigerant composition that functions as a heat transfer fluid in a cycle wherein the fluid optionally undergoes a phase change from a liquid to a gas and back.

The term fluoroolefin, as used herein, describes compounds which comprise carbon atoms, fluorine atoms, and optionally chlorine and/or hydrogen atoms. In one embodiment, the fluoroolefins used in the compositions of the present invention comprise compounds with 2 to 12 carbon atoms. In another embodiment the fluoroolefins comprise compounds with 3 to 10 carbon atoms, and in yet another embodiment the fluoroolefins comprise compounds with 3 carbon atoms. Representative fluoroolefins and chlorofluoroolefins include, but are not limited, to the compounds listed in Table 1, below.

**TABLE 1**

| | **Chemical name** | **Chemical formula** |
|---|---|---|
| HCFO-1112 | (E)-1,2-dichloro-1,2-difluoroethylene | CCIF=CCIF |
| | (Z)-1,2-dichloro-1,2-difluoroethylene | |
| HCFO-1113 | chlorotrifluoroethene | CClF=CF₂ |
| HCFO-1122 | 1-chloro-2,2-difluoroethene | CHCl=CF₂ |
| HCFO-1122a | l-chloro-1,2-difluoroethene | CHF=CCIF |
| HFO-1123 | 1,1,2-trifluoroethylene | CHF=CF₂ |
| HFO-E/Z-1132 | 1,1-Difluoroethylene | CHF=CHF |
| HFO1132a | 1,1-Difluoroethylene | CH₂=CF₂ |
| HCC-1140 | chloroethene | CH₂=CHCl |
| HFCO-1224yd | (E)-1-chloro-2,3,3,3-tetrafluoropropene | |
| | (Z)-1-chloro-2,3,3,3-tetrafluoropropene | |
| HFO-1225zc | 1,1,3,3,3-pentafluoroprop-1-ene | |
| E-HFO-1225ye | 1,2,3,3,3-pentafluoropropene | CF₃CF=CHF |
| Z-HFO-1225ye | 1,2,3,3,3-pentafluoropropene | CF₃CF=CHF |
| E-HFO-1233zd | (E)-chloro-3,3,3-trifluoropropene | CF₃CH=CHF |
| Z-HFO-1233zd | (Z)-1-chloro-3,3,3-trifluoropropene | |
| E-HFO-1234ze | 1,3,3,3-tetrafluoropropene | CF₃CH=CHF |
| Z-HFO-1234ze | 1,3,3,3-tetrafluoropropene | CF₃CH=CHF |
| HFO-1234ye | 1,2,3,3-tetrafluoropropene | CHF₂CF=CHF |
| HFO-1234zc | 1,1,3,3-tetrafluoro-1-propene | CHF₂CH=CF₂ |
| HFO1234yc | 1,1,2,3-tetrafluoro-1-propene | CH₂FCF=CF₂ |
| HFC-1243zf | 3, 3, 3-trifluoropropene | CF₃CH=CH₂ |
| HFO-1327mz | 1,1,1,2,4,4,4-heptafluorobut-2-ene | |
| Z-HFO-1336mzz | (Z)-1,1,1,4,4,4-hexafluoro-2-butene | CF₃CH=CHCF₃ |
| E-HFO-1336mzz | (E)-1,1,1,4,4,4-hexafluoro-2-butene | CF₃CH=CHCF₃ |

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B is true (or present).

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term 'consisting essentially of' occupies a middle ground between "comprising" and "consisting of."

Where applicants have defined an invention or a portion thereof with an open-ended term such as "comprising," it should be readily understood that (unless otherwise stated) the description should be interpreted to also include such an invention using the terms "consisting essentially of" or "consisting of."

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Also, disclosed herein are methods and systems including one or more steps or components may or may not be integrated with one another. In certain embodiments the component and method of using are integrated with one another, whereas in other embodiment some of the steps or component may be associated with other system and processes.

In certain embodiment disclosed any of the disclosed devices, systems and uses thereof are part of or combined with assembly or service facilities for automobiles, trucks, railcars or other transportation systems, or any moving carrier, known as "intermodal" systems, such as intermodal systems include "containers" (combined sea/land transport) as well as "swap bodies" (combined road and rail transport).

The fluoroolefin or blend compositions disclosed herein, include, but are not limited to compositions comprising HFO-1234yf alone or with 1,1,1,3-tetrafluoropropene (HFO-1234ze, R-1234ze or 1234ze), optionally including additional compounds selected from:
a) HFO-Z/E-1225ye;
b) HFO-Z/E-1225ye and HFC-32;
c) HFO-Z/E-1225ye and HFC-134a;
d) HFO-Z/E-1225ye, HFC-134a, and HFC-32;
e) HFO-Z/E-1225ye and HFO-1234yf; or
f) HFO-Z/E-1225ye, and HFC-125.

Further fluoroolefin compositions comprise a blend of at least one of HFO-1234yf and HFO-1234ze, as well as: i) R-134a, R-32 and R-125; ii) R-134a; iii) R-227ea; iv) R-236fa; and v) R-134, including, but not limited to commercially available blends including, but not limited to Opteon^{™} XL10, XP10, XP20, XP40, XP44, and commercially available HFO-1234ze blends such as R-448A from Honeywell International and marketed by Daikin Global.

In certain embodiments of the invention the refrigerant components and fluoroolefin compositions also include those identified in commonly owned U.S. Patent Publication Nos. 20210108119 and 2021004036, each disclosure of which is hereby incorporated herein by reference in its entirety, including, but not limited to the fluoroolefins identified in Tables 1-3 of U.S. Patent Publication Nos. 20210108119 and 2021004036.

In certain embodiments disclosed herein, the fluoroolefin comprises at least one of HFO-1234yf and HFO-1234ze and may be blended with at least one hydrofluorocarbon. Examples of suitable hydrofluorocarbons comprise at least one member selected from HFC-32, HFC-125, HFC-134a, HFC-152a, HFC-236fa and HFC-227ea. The amount of hydrofluorocarbon(s) can range from about 25 to about 75, about 30 to about 60 and in some cases about 30 to about 50 mole percent. In one particular embodiment, the foregoing amounts of hydrofluorocarbon(s) are blended with HFO-1234yf and HFO-1234ze.

In other embodiments, the refrigerant compositions contain at least about 99 weight percent HFO-1234yf and greater than 0 but less than 1 weight percent of at least one member comprising or selected from HFC-134a, HFO-1243zf, HFO-1225ye, HFO-1234ze, 3,3,3-trifluoro-1-propyne, HCFO-1233xf, HFC-245cb, HFO-1225zc and combinations thereof.

In other embodiments, the refrigerant compositions contain at least about 99.5 weight percent HFO-1234yf and greater than 0 but less than 0.5 weight percent of at least one member comprising or selected from HFC-134a, HFO-1243zf, HFO-1225ye, HFO-1234ze, 3,3,3-trifluoro-1-propyne, HCFO-1233xf, HFC-245cb and combinations thereof.

In other embodiments, the refrigerant compositions contain at least about 98 weight percent HFO-1234yf and greater than 0 but less than 2 weight percent of at least one member comprising or selected from HFC-134a, HFO-1243zf, HFO-1225ye, HFO-1234ze, 3,3,3-trifluoro-1-propyne, HCFO-1233xf, HFC-245cb, HFO-1225zc and combinations thereof.

In other embodiments of the refrigerant compositions comprises at least about 99 weight percent HFO-1234ze and greater than 0 but less than 1 weight percent of at least one member comprising or selected from HFO-1234yf, HFC-245fa, HFC-236fa, HFO-1234ye and combinations thereof.

If desired, the blended composition can further comprise at least one additional member selected from HCC-40, HCFC-22, CFC-115, HCFC-124, HCFC-1122, and CFC-1113. The amount of the additional member can comprise greater than 0 to about 5 wt.%, about 0 to about 2 wt.%, and in some cases about 0 to about 0.5 weight percent.

In one particular embodiment, the foregoing amounts of additional members are blended with at least one of HFO-1234yf and HFO-1234ze.

In another particular embodiment, the foregoing amounts of additional members are blended with at least one of HFO-1234yf and HFO-1234ze and at least one hydrofluorocarbon selected from HFC-32, HFC-125, HFC-134a, HFC-152a, 236fa and HFC-227ea, and in some cases, combined with carbon dioxide, where either HFO-1234yf and HFO-1234ze is present in an amount of at least 99 weight percent or at least about 99.5 weight percent.

To avoid the unwanted by-product formation from oligomerization, homopolymerization, or polymerization of fluoroolefins such as HFO-1234yf, inhibitors like terpenes, terpenoid, terpinenes, linear unsaturated hydrocarbons, such as those disclosed in commonly owned U.S. Patent Publication Nos. 20210108119 and 2021004036, each disclosure of which is hereby incorporated herein by reference in its entirety, are added.

To avoid the oligomer/polymer by-product formation from oligomerization, homopolymerization, or polymerization of fluoroolefins such as HFO-1234yf, inhibitors like terpenes, terpenoid, terpinenes, linear unsaturated hydrocarbons, such as those disclosed in commonly owned U.S. Patent Publication Nos. 20210108119 and 2021004036, each disclosure of which is hereby incorporated herein by reference in its entirety, or xylene and methylstyrene inhibitors such as those disclosed in commonly owned U.S. Provisional Patent Application Nos. 63/321118, entitled HYDROCARBON ADDITIVES FOR 1234YF AND HFC COMPOSITIONS, METHODS FOR THEIR PRODUCTION, STORAGE AND USAGE" and 63/321120, entitled, "HYDROCARBON ADDITIVES FOR 1234YF COMPOSITION AND METHODS FOR THEIR PRODUCTION, STORAGE AND USAGE", each filed on March 18, 2022 and hereby incorporated herein by reference in its entirety, are included.

By "inhibitor" it is meant to refer to at least one compound in accordance with the present invention that reduces, if not eliminates, conversion of hydrofluoroolefins into oligomers or polymers. While oligomerization, homopolymerization or polymerization reactions may be accelerated by relatively high temperatures, such reactions may also occur under ambient conditions depending upon the concentration and type of initiator (e.g., contaminant). The inhibitor can function as a radical inhibitor and without affecting the refrigeration system.

However, while these 1234yf inhibitor containing compositions or blends effectively react with oxygen and/or function as chain transfer agents to terminate the polymer chain propagation, the presence of the inhibitor may also reduce the purity of the refrigerant or refrigerant blend going to the refrigerant system, depending on the level of the inhibitor that is present. Accordingly, in certain embodiments, when it is time to introduce HFO-1234yf or HFO-1234yf blend compositions into the refrigerant system, the stored HFO-1234yf or HFO-1234yf stabilized blend compositions are passed through an absorbent bed such as silica gel to remove the inhibitors and /or stabilizers to ensure that high purity HFO-1234yf or HFO-1234yf blend compositions go to the refrigerant equipment or system. An additional benefit is that silica gel can also effectively remove water and reduce potential corrosion in the system.

Furthermore, refrigerant equipment may be provided with an oxygen removal subsystem including one or more oxygen removal devices, such a tube or column packed with or containing material suitable for removing or eliminating oxygen or oxidizing compounds by, e.g., deoxygenation or other mechanisms, and sensors to determine the presence of air or oxygen. The tubes/columns may be arranged in parallel or in series, and include valved by-pass lines, associated with, or located in-line with the refrigeration circuit, which are optionally responsive to the air/oxygen sensors, alone or combined with a moisture removing silica bed or drying medium, and optionally an ultraviolet-dye cartridge.

The oxygen removing tube/column generally contains a low valent transition metal such as Cu operated at ambient temperature and effectively reduces the oxygen level of the fluoroolefin composition below 5 ppm, below 4 ppm, below, 3 ppm, below 2 ppm, etc., but without affecting the fluoroolefin molecule, e.g., cleaving the C-F bond in favor of the more stable Cu-F bond. The oxygen removing column include valving adapted to provide a regenerating medium to the column after usage when either single or multiple columns are present. When multiple oxygen removing columns are present, appropriate by-pass lines are included so that the system can remain online and at least one column is operating while another column is being regenerated. Other metal-containing reducing reagents can be used for this purpose and include Ti, V, Mn, Fe, Co, Zn, Ni, and Pd, as well as ascorbate. Other oxygen scavengers, such as, NaHSO₃, Na₂SO₃, Na₂S₂O₅, Na₂S₂O₃, Na₂S₂O₄; polyhydroxy benzene such as pyrogallor; Cr (II) salts; P(=O) H₂OM, M=alkaline metal, and alkaline earth metal, may be used.

Furthermore, the refrigerant equipment described herein may include systems to remove oligomer / by-products from the HFO-1234yf or HFO-1234yf blend compositions, with or without lubricant oil, and include oil-return lines so that the lubricant can be returned to the compressor. As used herein, oil-return may refer to the ability of a heat transfer composition to carry lubricant through a heat transfer system and return it to the compressor. That is, in use, it is not uncommon for some portion of the compressor lubricant to be carried away by the heat transfer composition from the compressor into the other portions of the system. In such systems, if the lubricant is not efficiently returned to the compressor, the compressor will eventually fail due to lack of lubrication.

In some embodiments, the lubricant is a mineral oil lubricant. In some embodiments, the mineral oil lubricant is selected from paraffins (including straight carbon chain saturated hydrocarbons, branched carbon chain saturated hydrocarbons, and mixtures thereof), naphthenes (including saturated cyclic and ring structures), aromatics (those with unsaturated hydrocarbons containing one or more ring, wherein one or more ring is characterized by alternating carbon-carbon double bonds) and non-hydrocarbons (those molecules containing atoms such as sulfur, nitrogen, oxygen and mixtures thereof), and mixtures and combinations thereof.

Some embodiments may contain one or more synthetic lubricant. In some embodiments, the synthetic lubricant is selected from alkyl substituted aromatics (such as benzene or naphthalene substituted with linear, branched, or mixtures of linear and branched alkyl groups, often generically referred to as alkylbenzenes), synthetic paraffins and napthenes, poly (alpha olefins), polyglycols (including polyalkylene glycols), dibasic acid esters, polyesters, neopentyl esters, polyvinyl ethers (PVEs), silicones, silicate esters, fluorinated compounds, phosphate esters, polycarbonates and mixtures thereof, meaning mixtures of any of the lubricants disclosed in this paragraph.

The lubricants as disclosed herein may be commercially available lubricants. For instance, the lubricant may be paraffinic mineral oil, sold by BVA Oils as BVM 100 N, naphthenic mineral oils sold by Crompton Co. under the trademarks Suniso^{®} 1GS, Suniso^{®} 3GS and Suniso^{®} 5GS, naphthenic mineral oil sold by Pennzoil under the trademark Sontex^{®} 372LT, naphthenic mineral oil sold by Calumet Lubricants under the trademark Calumet^{®} RO-30, linear alkylbenzenes sold by Shrieve Chemicals under the trademarks Zerol^{®} 75, Zerol^{®} 150 and Zerol^{®} 500 and branched alkylbenzene sold by Nippon Oil as HAB 22, polyol esters (POEs) sold under the trademark Castrol^{®} 100 by Castrol, United Kingdom, polyalkylene glycols (PAGs) such as RL-488A from Dow (Dow Chemical, Midland, Mich.), and mixtures thereof, meaning mixtures of any of the lubricants disclosed in this paragraph.

The lubricants used with the present invention may be designed for use with hydrofluoroolefin and/or hydrofluorocarbon refrigerants and may be miscible with compositions as disclosed herein under compression refrigeration and air-conditioning apparatus' operating conditions. In some embodiments, the lubricants are selected by considering a given compressor's requirements and the environment to which the lubricant will be exposed.

A refrigerant container as used herein may be any closed device that maintains a supply of HFO-1234yf or HFO-1234yf blend composition, with or without an inhibitor, under pressure, including but not limited to e.g., a container, a cannister, a tank, a cylinder, a vessel subsequently used in a refrigeration circuit of a refrigeration apparatus, air-conditioning apparatus, or heat pump apparatus which optionally includes an oxygen or air sensor (not shown). The refrigerant container may also be the refrigeration circuit of the refrigeration apparatus, air-conditioning apparatus, or heat pump apparatus in which the refrigerant or blend is used. Additionally, the refrigerant container may be a storage container or cannister for fresh refrigerant or a storage container or cannister for collecting HFO-1234yf or HFO-1234yf blend composition to be reclaimed.

As used herein, a refrigeration circuit may be part of any heat transfer system fixed in place during operation. A stationary heat transfer system may be located within, attached to, or otherwise associated with buildings of any or a stand-alone device located outdoors, such as a soft drink vending machine. These stationary applications may include, but not limited to stationary air conditioning units and heat pumps, chillers; high temperature heat pumps; and residential, commercial, or industrial air conditioning systems (including residential heat pumps). In stationary refrigeration applications, the disclosed stabilized or purified compositions or blends may be useful in various items of equipment, including commercial, industrial, or residential refrigerators and freezers; ice machines; self-contained coolers and freezers; flooded evaporator chillers; direct expansion chillers; walk-in and reach-in coolers and freezers; and combination systems. In some embodiments, the disclosed compositions may be used in supermarket refrigeration systems. Additionally, stationary applications may utilize a secondary loop system, where a secondary fluid is cooled by a primary refrigerant, and the secondary fluid is then pumped to a remote location in order to provide a cooling effect at that remote location.

As used herein a refrigeration circuit may also be part of a, mobile heat transfer system and refers to any refrigeration, air conditioner or heating apparatus incorporated into a transportation unit for the road, rail, sea or air, and includes a refrigeration circuit . In addition, mobile refrigeration or air conditioner units, include those apparatus that are independent of any moving carrier and are known as "intermodal" systems. Such intermodal systems include "container' (combined sea/land transport) as well as "swap bodies" (combined road/rail transport). Such a mobile refrigeration.

A heat transfer medium (also referred to herein as a heat transfer fluid, a heat transfer composition or a heat transfer fluid composition or refrigerant composition) is a working fluid used to carry heat from a heat source to a heat sink.

As used herein, the term "lubricant" means any material added to a composition or a compressor (and in contact with any heat transfer composition in use within any heat transfer system) that provides lubrication to the compressor to aid in preventing parts from seizing.

As used herein, compatibilizers are compounds which improve solubility of the hydrofluorocarbon of the disclosed compositions in heat transfer system lubricants. In some embodiments, the compatibilizers improve oil return to the compressor. In some embodiments, the composition is used with a system lubricant to reduce oil-rich phase viscosity.

One method embodiment of the invention involves operating the refrigerant system equipment by:
a) providing a pressurized fluoroolefin refrigerant composition comprising at least one of HFO-1234yf and HFO-1234ze, optionally at least one hydrofluorocarbon selected from HFC-32, HFC-125, HFC-134a, HFC-152a, 236fa, E/Z-R-1132, R-1132a, and HFC-227ea, and optionally carbon dioxide;
b) discharging and passing said composition through a device housing a supported or unsupported oligomerization inhibiting agent selected from limonene, α-terpinene, and α-tocopherol, and mixtures of two or more thereof;
c) adding up to 0.5 weight percent of said agent to the refrigerant composition to form a fluoroolefin stabilized feed stabilized against at least one of oligomerization and polymerization; and
d) charging the refrigerant equipment with the fluoroolefin stabilized feed of c).

Another method embodiment of the invention involves operating the refrigerant system equipment by:
a) providing pressurized HFO-1234yf;
b) discharging and passing the HFO-1234yf through a device containing a supported or unsupported supply of an oligomerization inhibiting agent selected from d-limonene, I-limonene, β-pinene, α-pinene, α-terpinene, β-terpinene, γ-terpinene, and δ-terpinene, and mixtures of two or more thereof;
c) adding up to 0.5 weight percent of said agent to the refrigerant composition to form an HFO-1234yf feed stabilized against at least one of oligomerization and polymerization; and
d) charging the refrigerant equipment with the stabilized feed of c).

Another method embodiment of the invention involves operating the refrigerant system equipment by:
a) providing pressurized HFO-1234yf;
b) discharging and passing the HFO-1234yf through a column containing a supported or unsupported supply of at least one oligomerization inhibiting agent selected from ethane, propane, cyclopropane, propylene, butane, butene, isobutane, isobutene, 2-methylbutane, ortho-(o-), meta- (m-), or para-(p-) xylene, and one of:
   i. alpha (α)-methyl styrene (C₆H₅C(CH₃) =CH₂),
   ii. alpha, 2-dimethyl styrene (ortho (o)-alpha (α), 2-dimethylstyrene),
   iii. alpha, 3-dimethyl styrene (meta (m)-, α , 3-dimethylstyrene);
   iv. alpha, 4-dimethyl styrene (p, α-dimethyl styrene);
c) adding up to 0.5 weight percent of said agent to the refrigerant composition to form a stabilized HFO-1234yf feed stabilized against at least one of oligomerization and polymerization; and
d) charging the refrigerant equipment with the stabilized feed of c).

Another method embodiment of the invention involves maintaining the integrity of a refrigerant in a system having at least a refrigeration circuit by:
- providing at least one of (1) a stabilized source of an HFO-1234yf and HFO-1234ze refrigerant composition, or (2) an unstabilized source of an HFO-1234yf and HFO-1234ze refrigerant composition;
- purifying (1) by removing stabilizers from the HFO-1234yf and HFO-1234ze refrigerant composition, or stabilizing (2) by adding an effective amount of an oligomerization inhibitor to the unstabilized HFO-1234yf and HFO-1234ze refrigerant composition;
- charging the refrigeration circuit with (1) after the stabilizers of the HFO-1234yf and HFO-1234ze refrigerant composition have been removed, or (2) after the effective amount of an oligomerization inhibitor has been added to the unstabilized source of an HFO-1234yf and HFO-1234ze refrigerant composition;
- circulating refrigerant in the charged circuit; and, optionally
- removing one of moisture, oxygen and oligomer products and by-products from the charged refrigeration circuit.

Another method embodiment of the invention involves maintaining the integrity of a refrigerant in a system having at least a refrigeration circuit by:
- removing moisture from fluoroolefin stabilized refrigerant in the circuit;
- drying the fluoroolefin stabilized refrigerant in the circuit;
- optionally detecting the presence of at least one of air, oxygen and moisture;
- removing oxygen and oxygen containing compounds capable of initiating of fluoroolefin oligomerization and/or polymerization in the fluoroolefin stabilized feed in the circuit; and
- removing one of oligomerization-polymerization products and by-products from the fluoroolefin stabilized feed in the circuit.

In certain embodiments, the refrigeration equipment includes a refrigeration circuit for conveying a fluoroolefin containing composition including at least one compressor, at least one evaporator, at least one condenser, at least one expansion device which may be an orifice, capillary tube or an expansion valve, and optionally one or more devices, e.g., tube, column, housing for removing oxygen and/ or moisture, optionally at least one of: at least one service valve for charging or discharging fluoroolefin containing compositions to and from refrigeration equipment; a stabilized refrigerant charging subsystem and/or kit; a purified refrigerant charging subsystem; a subsystem for separating oligomer/polymer; an oligomer/polymer filter and an HFO-1234yf derived oligomer/polymer filter.

Disclosed herein are stabilized refrigerant charging subsystems provided with fittings adapted for connecting and charging a stabilized refrigerant to a refrigerant circuit or refrigeration equipment including, but not limited to,
1) a tank filled with HFO-1234yf and a cartridge supply of d-limonene,
2) a tank filled with HFO-1234yf and a cartridge supply of I-limonene,
3) a tank filled with HFO-1234yf and a cartridge supply of β-pinene,
4) a tank filled with HFO-1234yf and a cartridge supply of α-pinene,
5) a tank filled with HFO-1234yf and a cartridge supply of α-terpinene,
6) a tank filled with HFO-1234yf and a cartridge supply of β-terpinene,
7) a tank filled with HFO-1234yf and a cartridge supply of γ-terpinene,
8) a tank filled with HFO-1234yf and a cartridge supply of δ-terpinene,
9) a tank filled with HFO-1234yf and a cartridge supply of ethane,
10) a tank filled with HFO-1234yf and a cartridge supply of propane,
11) a tank filled with HFO-1234yf and a cartridge supply of cyclopropane,
12) a tank filled with HFO-1234yf and a cartridge supply of propylene,
13) a tank filled with HFO-1234yf and a cartridge supply of butane,
14) a tank filled with HFO-1234yf and a cartridge supply of butene,
15) a tank filled with HFO-1234yf and a cartridge supply of isobutane
16) a tank filled with HFO-1234yf and a cartridge supply of isobutene,
17) a tank filled with HFO-1234yf and a cartridge supply of 2-methylbutane,
18) a tank filled with HFO-1234yf and a cartridge supply of meta-xylene,
19) a tank filled with HFO-1234yf and a cartridge supply of ortho-xylene, or
20) a tank filled with HFO-1234yf and a cartridge supply of para-xylene, wherein the tank optionally includes a sensor for detecting air and or oxygen.

Disclosed herein are stabilized refrigerant charging subsystems provided with fittings adapted for connecting and charging a stabilized refrigerant to a refrigerant circuit or refrigeration equipment including, but not limited to,
1) a tank filled with HFO-1234ze and a cartridge supply of d-limonene, or
2) a tank filled with HFO-1234ze and a cartridge supply of I-limonene, or
3) a tank filled with HFO-1234ze and a cartridge supply of β-pinene, or
4) a tank filled with HFO-1234ze and a cartridge supply of α-pinene, or
5) a tank filled with HFO-1234ze and a cartridge supply of α-terpinene, or
6) a tank filled with HFO-1234ze and a cartridge supply of β-terpinene, or
7) a tank filled with HFO-1234ze and a cartridge supply of γ-terpinene, or
8) a tank filled with HFO-1234ze and a cartridge supply of δ-terpinene, or
9 a tank filled with HFO-1234ze and a cartridge supply of ethane, or
10) a tank filled with HFO-1234ze and a cartridge supply of propane, or
11) a tank filled with HFO-1234ze and a cartridge supply of cyclopropane, or
12) a tank filled with HFO-1234ze and a cartridge supply of propylene, or
13) a tank filled with HFO-1234ze and a cartridge supply of butane, or
14) a tank filled with HFO-1234ze and a cartridge supply of butene, or
15) a tank filled with HFO-1234ze and a cartridge supply of isobutane, or
16) a tank filled with HFO-1234ze and a cartridge supply of isobutene, or
17) a tank filled with HFO-1234ze and a cartridge supply of 2-methylbutane, or
18) a tank filled with HFO-1234ze and a cartridge supply of meta-xylene, or
19) a tank filled with HFO-1234ze and a cartridge supply of ortho-xylene, or
20) a tank filled with HFO-1234ze and a cartridge supply of para-xylene,
wherein any of the tanks 1-20 optionally includes a sensor for detecting air and or oxygen.

Disclosed herein are stabilized refrigerant charging subsystems provided with fittings adapted for connecting and charging a stabilized refrigerant to a refrigerant circuit or refrigeration equipment including, but not limited to,
1) a tank filled with HFO-1234yf and HFO-1234ze and a cartridge supply of d-limonene, or
2) a tank filled with HFO-1234yf and HFO-1234ze and a cartridge supply of I-limonene, or
3) a tank filled with HFO-1234yf and HFO-1234ze and a cartridge supply of β-pinene, or
4) a tank filled with HFO-1234yf and HFO-1234ze and a cartridge supply of α-pinene, or
5) a tank filled with HFO-1234yf and HFO-1234ze and a cartridge supply of α-terpinene, or
6) a tank filled with HFO-1234yf and HFO-1234ze and a cartridge supply of β-terpinene, or
7) a tank filled with HFO-1234yf and HFO-1234ze and a cartridge supply of γ-terpinene, or
8) a tank filled with HFO-1234yf and HFO-1234ze and a cartridge supply of δ-terpinene, or
9) a tank filled with HFO-1234yf and HFO-1234ze and a cartridge supply of ethane, or
10) a tank filled with HFO-1234yf and HFO-1234ze and a cartridge supply of propane, or
11) a tank filled with HFO-1234yf and HFO-1234ze and a cartridge supply of cyclopropane, or
12) a tank filled with HFO-1234yf and HFO-1234ze and a cartridge supply of propylene, or
13) a tank filled with HFO-1234yf and HFO-1234ze and a cartridge supply of butane, or
14) a tank filled with HFO-1234yf and HFO-1234ze and a cartridge supply of butene, or
15) a tank filled with HFO-1234yf and HFO-1234ze and a cartridge supply of isobutene, or
16) a tank filled with HFO-1234yf and HFO-1234ze and a cartridge supply of 2-methylbutane, or
17) a tank filled with HFO-1234yf and HFO-1234ze and a cartridge supply of meta-xylene, or
18) a tank filled with HFO-1234yf and HFO-1234ze and a cartridge supply of ortho-xylene, or
19) a tank filled with HFO-1234yf and HFO-1234ze and a cartridge supply of para-xylene.

Disclosed herein are stabilized refrigerant charging subsystems provided with fittings adapted for connecting and charging a stabilized refrigerant to a refrigerant circuit or refrigeration equipment including, but not limited to,
1) a tank filled with HFO-1234yf and HFC-32 and a cartridge supply of d-limonene, or
2) a tank filled with HFO-1234yf and HFC-32 and a cartridge supply of I-limonene, or
3) a tank filled with HFO-1234yf and HFC-32 and a cartridge supply of β-pinene, or
4) a tank filled with HFO-1234yf and HFC-32 and a cartridge supply of α-pinene, or
5) a tank filled with HFO-1234yf and HFC-32 and a cartridge supply of α-terpinene, or
6) a tank filled with HFO-1234yf and HFC-32 and a cartridge supply of β-terpinene, or
7) a tank filled with HFO-1234yf and HFC-32 and a cartridge supply of γ-terpinene, or
8) a tank filled with HFO-1234yf and HFC-32 and a cartridge supply of δ-terpinene, or
9) a tank filled with HFO-1234yf and HFC-32 and a cartridge supply of ethane, or
10) a tank filled with HFO-1234yf and HFC-32 and a cartridge supply of propane, or
11) a tank filled with HFO-1234yf and HFC-32 and a cartridge supply of cyclopropane, or
12) a tank filled with HFO-1234yf and HFC-32 and a cartridge supply of propylene, or
13) a tank filled with HFO-1234yf and HFC-32 and a cartridge supply of butane, or
14) a tank filled with HFO-1234yf and HFC-32 and a cartridge supply of butene, or
15) a tank filled with HFO-1234yf and HFC-32 and a cartridge supply of isobutene, or
16) a tank filled with HFO-1234yf and HFC-32 and a cartridge supply of 2-methylbutane, or
17) a tank filled with HFO-1234yf and HFC-32 and a cartridge supply of meta-xylene, or
18) a tank filled with HFO-1234yf and HFC-32 and a cartridge supply of ortho-xylene, or
19) a tank filled with HFO-1234yf and HFC-32 and a cartridge supply of para-xylene, wherein the tank optionally includes a sensor for detecting air and or oxygen.

Disclosed herein are stabilized refrigerant charging subsystems provided with fittings adapted for connecting and charging a stabilized refrigerant to a refrigerant circuit or refrigeration equipment including, but not limited to,
1) a tank filled with HFO-1234yf and HFC-125 and a cartridge supply of d-limonene, or
2) a tank filled with HFO-1234yf and HFC-125 and a cartridge supply of I-limonene, or
3) a tank filled with HFO-1234yf and HFC-125 and a cartridge supply of β-pinene, or
4) a tank filled with HFO-1234yf and HFC-125 and a cartridge supply of α-pinene, or
5) a tank filled with HFO-1234yf and HFC-125 and a cartridge supply of α-terpinene, or
6) a tank filled with HFO-1234yf and HFC-125 and a cartridge supply of β-terpinene, or
7) a tank filled with HFO-1234yf and HFC-125 and a cartridge supply of γ-terpinene, or
8) a tank filled with HFO-1234yf and HFC-125 and a cartridge supply of δ-terpinene, or
9) a tank filled with HFO-1234yf and HFC-125 and a cartridge supply of ethane, or
10) a tank filled with HFO-1234yf and HFC-125 and a cartridge supply of propane, or
11) a tank filled with HFO-1234yf and HFC-125 and a cartridge supply of cyclopropane, or
12) a tank filled with HFO-1234yf and HFC-125 and a cartridge supply of propylene, or
13) a tank filled with HFO-1234yf and HFC-125 and a cartridge supply of butane, or
14) a tank filled with HFO-1234yf and HFC-125 and a cartridge supply of butene, or
15) a tank filled with HFO-1234yf and HFC-125 and a cartridge supply of isobutene, or
16) a tank filled with HFO-1234yf and HFC-125 and a cartridge supply of 2-methylbutane, or
17) a tank filled with HFO-1234yf and HFC-125 and a cartridge supply of meta-xylene, or
18) a tank filled with HFO-1234yf and HFC-125 and a cartridge supply of ortho-xylene, or
19) a tank filled with HFO-1234yf and HFC-125 and a cartridge supply of para-xylene,
wherein any of the tanks 1-19 optionally includes a sensor for detecting air and/or oxygen.

Disclosed herein are stabilized refrigerant charging subsystems provided with fittings adapted for connecting and charging a stabilized refrigerant to a refrigerant circuit or refrigeration equipment including, but not limited to,
1) a tank filled with HFO-1234yf, HFC-32 and HFC-125 and a cartridge supply of d-limonene, or
2) a tank filled with HFO-1234yf, HFC-32 and HFC-125 and a cartridge supply of I-limonene, or
3) a tank filled with HFO-1234yf, HFC-32 and HFC-125 and a cartridge supply of β-pinene, or
4) a tank filled with HFO-1234yf, HFC-32 and HFC-125 and a cartridge supply of α-pinene, or
5) a tank filled with HFO-1234yf, HFC-32 and HFC-125 and a cartridge supply of α-terpinene, or
6) a tank filled with HFO-1234yf, HFC-32 and HFC-125 and a cartridge supply of β-terpinene, or
7) a tank filled with HFO-1234yf, HFC-32 and HFC-125 and a cartridge supply of γ-terpinene, or
8) a tank filled with HFO-1234yf, HFC-32 and HFC-125 and a cartridge supply of δ-terpinene, or
9) a tank filled with HFO-1234yf, HFC-32 and HFC-125 and a cartridge supply of ethane, or
10) a tank filled with HFO-1234yf, HFC-32 and HFC-125 and a cartridge supply of propane, or
11) a tank filled with HFO-1234yf, HFC-32 and HFC-125 and a cartridge supply of cyclopropane, or
12) a tank filled with HFO-1234yf, HFC-32 and HFC-125 and a cartridge supply of propylene, or
13) a tank filled with HFO-1234yf, HFC-32 and HFC-125 and a cartridge supply of butane, or
14) a tank filled with HFO-1234yf, HFC-32 and HFC-125 and a cartridge supply of butene, or
15) a tank filled with HFO-1234yf, HFC-32 and HFC-125 and a cartridge supply of isobutene, or
16) a tank filled with HFO-1234yf, HFC-32 and HFC-125 and a cartridge supply of 2-methylbutane, or
17) a tank filled with HFO-1234yf, HFC-32 and HFC-125 and a cartridge supply of meta-xylene, or
18) a tank filled with HFO-1234yf, HFC-32 and HFC-125 and a cartridge supply of ortho-xylene, or
19) a tank filled with HFO-1234yf, HFC-32 and HFC-125 and a cartridge supply of para-xylene,
wherein any of the tanks 1-19 optionally includes a sensor for detecting air and/or oxygen.

Disclosed herein are stabilized refrigerant charging subsystems provided with fittings adapted for connecting and charging a stabilized refrigerant to a refrigerant circuit or refrigeration equipment including, but not limited to,
1) a tank filled with HFO-1234yf and HFC-134/HFC-134a and a cartridge supply of d-limonene, or
2) a tank filled with HFO-1234yf and HFC-134/HFC-134a and a cartridge supply of I-limonene, or
3) a tank filled with HFO-1234yf and HFC-134/HFC-134a and a cartridge supply of β-pinene, or
4) a tank filled with HFO-1234yf and HFC-134/HFC-134a and a cartridge supply of α-pinene, or
5) a tank filled with HFO-1234yf and HFC-134/HFC-134a and a cartridge supply of α-terpinene, or
6) a tank filled with HFO-1234yf and HFC-134/HFC-134a and a cartridge supply of β-terpinene, or
7) a tank filled with HFO-1234yf and HFC-134/HFC-134a and a cartridge supply of γ-terpinene, or
8) a tank filled with HFO-1234yf and HFC-134/HFC-134a and a cartridge supply of δ-terpinene, or
9) a tank filled with HFO-1234yf and HFC-134/HFC-134a and a cartridge supply of ethane, or
10) a tank filled with HFO-1234yf and HFC-134/HFC-134a and a cartridge supply of propane, or
11) a tank filled with HFO-1234yf and HFC-134/HFC-134a and a cartridge supply of cyclopropane, or
12) a tank filled with HFO-1234yf and HFC-134/HFC-134a and a cartridge supply of propylene, or
13) a tank filled with HFO-1234yf and HFC-134/HFC-134a and a cartridge supply of butane, or
14) a tank filled with HFO-1234yf and HFC-134/HFC-134a and a cartridge supply of butene, or
15) a tank filled with HFO-1234yf and HFC-134/HFC-134a and a cartridge supply of isobutene, or
16) a tank filled with HFO-1234yf and HFC-134/HFC-134a and a cartridge supply of 2-methylbutane, or
17) a tank filled with HFO-1234yf and HFC-134/HFC-134a and a cartridge supply of meta-xylene, or
18) a tank filled with HFO-1234yf and HFC-134/HFC-134a and a cartridge supply of ortho-xylene, or
19) a tank filled with HFO-1234yf and HFC-134/HFC-134a and a cartridge supply of para-xylene.

Disclosed herein are stabilized refrigerant charging subsystems provided with fittings adapted for connecting and charging a stabilized refrigerant to a refrigerant circuit or refrigeration equipment including, but not limited to,
1) a tank filled with HFO-1234yf, HFC-32, HFC-125 and HFC-134/HFC-134a and a cartridge supply of d-limonene, or
2) a tank filled with HFO-1234yf, HFC-32, HFC-125 and HFC-134/HFC-134a and a cartridge supply of I-limonene, or
3) a tank filled with HFO-1234yf, HFC-32, HFC-125 and HFC-134/HFC-134a and a cartridge supply of β-pinene, or
4) a tank filled with HFO-1234yf, HFC-32, HFC-125 and HFC-134/HFC-134a and a cartridge supply of α-pinene, or
5) a tank filled with HFO-1234yf, HFC-32, HFC-125 and HFC-134/HFC-134a and a cartridge supply of α-terpinene, or
6) a tank filled with HFO-1234yf, HFC-32, HFC-125 and HFC-134/HFC-134a and a cartridge supply of β-terpinene, or
7) a tank filled with HFO-1234yf, HFC-32, HFC-125 and HFC-134/HFC-134a and a cartridge supply of γ-terpinene, or
8) a tank filled with HFO-1234yf, HFC-32, HFC-125 and HFC-134/HFC-134a and a cartridge supply of δ-terpinene, or
9) a tank filled with HFO-1234yf, HFC-32, HFC-125 and HFC-134/HFC-134a and a cartridge supply of ethane, or
10) a tank filled with HFO-1234yf, HFC-32, HFC-125 and HFC-134/HFC-134a and a cartridge supply of propane, or
11) a tank filled with HFO-1234yf, HFC-32, HFC-125 and HFC-134/HFC-134a and a cartridge supply of cyclopropane, or
12) a tank filled with HFO-1234yf, HFC-32, HFC-125 and HFC-134/HFC-134a and a cartridge supply of propylene, or
13) a tank filled with HFO-1234yf, HFC-32, HFC-125 and HFC-134/HFC-134a and a cartridge supply of butane, or
14) a tank filled with HFO-1234yf, HFC-32, HFC-125 and HFC-134/HFC-134a and a cartridge supply of butene, or
15) a tank filled with HFO-1234yf, HFC-32, HFC-125 and HFC-134/HFC-134a and a cartridge supply of isobutene, or
16) a tank filled with HFO-1234yf, HFC-32, HFC-125 and HFC-134/HFC-134a and a cartridge supply of 2-methylbutane, or
17) a tank filled with HFO-1234yf, HFC-32, HFC-125 and HFC-134/HFC-134a and a cartridge supply of meta-xylene, or
18) a tank filled with HFO-1234yf, HFC-32, HFC-125 and HFC-134/HFC-134a and a cartridge supply of ortho-xylene, or a tank filled with HFO-1234yf, HFC-32, HFC-125 and HFC-134/HFC-134a and a cartridge supply of para-xylene,
wherein any of the tanks 1-18 optionally includes a sensor for detecting air and/or oxygen.

Disclosed herein are stabilized refrigerant charging subsystems provided with fittings adapted for connecting and charging a stabilized refrigerant to a refrigerant circuit or refrigeration equipment including, but not limited to,
1) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of d-limonene, or
2) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of I-limonene, or
3) a tank filled with HFO-1234yf and optionally at least one additional refrigerant selected from HFO-1234ze, HFC-32, HFC-125, HFC-134a, HFC-152a, E/Z-HFO-1132, HFO-1132a and a cartridge supply of β-pinene, or
4) a tank filled with HFO-1234yf and optionally at least one additional refrigerant selected from HFO-1234ze, HFC-32, HFC-125, HFC-134a, HFC-152a, E/Z-HFO-1132, HFO-1132a and a cartridge supply of α-pinene, or
5) a tank filled with HFO-1234yf and HFO-1234ze and a cartridge supply of α-terpinene, or
6) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of β-terpinene, or
7) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of γ-terpinene, or
8) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of δ-terpinene, or
9) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of ethane, or
10) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of propane, or
11) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of cyclopropane, or
12) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of propylene, or
13) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of butane, or
14) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of butene, or
15) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of isobutene, or
16) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of 2-methylbutane, or
17) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of meta-xylene, or
18) a tank filled with HFO-1234yf and optionally at least one additional refrigerant selected from HFO-1234ze, HFC-32, HFC-125, HFC-134a, HFC-152a, E/Z-HFO-1132 and HFO-1132a, and a cartridge supply of ortho-xylene, or
19) a tank filled with HFO-1234yf and optionally at least one additional refrigerant selected from the HFO-1234ze, HFC-32, HFC-125, HFC-134a, HFC-152a, E/Z-HFO-1132 and HFO-1132a, and a cartridge supply of para-xylene.

In one embodiment, the refrigeration circuit includes first and second service valves, and a stabilized refrigerant charging subsystem including a self-contained contained pressurized source of a fluoroolefin refrigerant composition, a flow through cartridge, and an oligomerization/polymerization inhibitor for stabilizing the fluoroolefin refrigerant composition, and said cartridge has an outlet connected to and in flow communication with a high pressure side of said service valve for charging said circuit with stabilized fluoroolefin refrigerant, which circuit is a closed loop.

In one embodiment, the refrigerant line of the refrigeration equipment or the refrigerant line of a refrigerant circuit includes or is retrofitted to include at least one of a), b), c) and d) in series or in parallel:
a) flow-through treatment zones which house a material which dries the refrigerant composition or blend and/or which house deoxygenation reagents suitable for removing oxygen from fluoroolefin-containing mixtures optionally at room temperature, e.g., 20° to 30°C. Each treatment zone or combination of treatments zone can be regenerated. Reagents that can be used for removing oxygen include, but are not limited to Ti, V, Mn, Fe, Co, Zn, Ni, and Pd, as well as ascorbate;
b) a tube or capsule or cartridge of oligomer inhibiting stabilizer in which the stabilizer is supported on pellets or other inert media or unsupported, e.g., a self-supporting solid or a liquid added to the refrigerant composition or blend by the fluoroolefin flow. Various oligomer or polymer inhibiting stabilizers, including but not limited to the inhibitors described in U.S. Patent Publication Nos. US20210108119 and US202100430368 and d-limonene, I-limonene, β-pinene, α-pinene, α-terpinene, β-terpinene, γ-terpinene, and δ-terpinene, and mixtures of two or more thereof;
c) a device for removing moisture, and
d) a separating filter system to remove oligomer/polymer products and/or by-products that might form during circulation of the refrigerant composition or blend.

In other embodiments, the refrigerant line of mobile refrigeration equipment or the refrigerant line of a mobile refrigerant circuit includes or is retrofitted to include at least one of a), b), c) and d) in series or in parallel:
a) flow-through treatment zones which house a material which dries the refrigerant composition or blend and/or which house deoxygenation reagents suitable for removing oxygen from fluoroolefin-containing mixtures optionally at room temperature, e.g., 20° to 30°C. Each treatment zone or combination of treatments zone can be regenerated. Reagents that can be used for removing oxygen include, but are not limited to Ti, V, Mn, Fe, Co, Zn, Ni, and Pd, as well as ascorbate;
b) a tube or capsule or cartridge of oligomer inhibiting stabilizer in which the stabilizer is supported on pellets or other inert media or unsupported, e.g., a self-supporting solid or a liquid added to the refrigerant composition or blend by the fluoroolefin flow. Various oligomer or polymer inhibiting stabilizers, including but not limited to the inhibitors described in U.S. Patent Publication Nos. US20210108119 and US202100430368 and d-limonene, I-limonene, β-pinene, α-pinene, α-terpinene, β-terpinene, γ-terpinene, and δ-terpinene, and mixtures of two or more thereof;
c) a device for removing moisture, and
d) a separating filter system to remove oligomer/polymer products and/or by-products that might form during circulation of the refrigerant composition or blend.

In still other embodiments disclosed herein a mobile refrigeration system of a transport vehicle can be brought to a service center having a Recover, Recycling and Recharge machine (RRRM) and connected to one of more of systems for (1) adding stabilizer to a source of HFO-1234yf or HFO-1234yf blends to be charged, (2) removing the stabilizer of a stabilized HFO-1234yf or stabilized HFO-1234yf blend to be charged, (3) attaching a stabilizer injection kit for systems running on OpteonTM products, or R448Af or dosing stabilizer into the system.

One embodiment of the invention includes refrigeration systems with a self-containing pressurized source of a fluoroolefin comprising at least 2,3,3,3-tetrafluoropropene; a refrigerant circuit capable of circulating a refrigerant which circuit includes at least a first in-line charging valve; a first flow line providing fluid-controlled flow between said pressurized a treatment unit; a second flow line providing fluid-controlled flow between the treatment unit and the first in-line charging valve on the downstream side of the compressor; at least one or more in-line flow-through oxygen removing tube/column containing deoxygenation reagent units suitable for removing oxygen and oxidizing compounds from fluoroolefin-containing mixtures optionally at room temperature, e.g., 20° to 30°C, include, but are not limited to zero valent or low valent transition metals, and reduced oxides of transitions metals where the transition is selected from the group comprising Cu, Ti, V, Mn, Fe, Co, Zn, Ni, and Pd. Said zero valent or low valent transition metals and reduced oxides of transitions metals may be obtained commercially or may be prepared by heating a transition metal oxide in the presence of a reducing agent such as hydrogen at an elevated temperature (100°C to 300°C) in a vessel such as a tube or column. Examples of metal oxides suitable for reduction in this manner include CuO, TiO₂, V₂O₅, Mn₂O₃, Fe₂O₃, Co₃O₄, ZnO, NiO, and PdO. Other deoxygenation reagents include solutions of ascorbic acid salts, NaHSO₄, Na₂SO₃, Na₂S₂O₅, Na₂S₂O₃, Na₂S₂O₂, polyhydroxy benzene compounds such as pyrogallol; Ti (III) salts, Cr (II) salts, Sn (II) salts, Fe (II) salts; nitrite salts, and hypophosphite salts. Oxygen removal from fluoroolefin compositions may be conducted by passing the fluoroolefin mixture through a tube/column or bed of deoxygenation reagent(s) at about 20°C to about 30°C.

Although some metals/metal oxides are known as oxygen scavengers, generally these compounds are very reactive towards fluoroolefins based on the technical literature. It was surprising that certain reduced metal oxides of Cu, Ti, V, Mn, Fe, Co, Zn, Ni, and Pd perform the intended function of removing oxygen, but without cleavage of the C-F bond in 2,3,3,3-tetrafluoropropene or other fluoroolefins. Metals/metal oxides present in known oxygen scavengers have been used to cleave the C-F bonds to form more stable metal fluoride bonds could remove oxygen without its expected C-F bond cleavage. Cleavage of the C-F bond in fluoroolefins (C=C-F) is quite common. Metal-fluorine bonds (e.g., Cu-F ~ 431 kJ/mol) are more stable than metal-oxygen (e.g., Cu-O ~343 kJ/mol) bonds, so there is an energetic driving force for reaction of metal oxides (the products of oxygen scavenging), with organofluorine compounds. Thus, it was not expected and unobvious that materials useful for scrubbing oxygen from inert gases (Ar, N₂), hydrocarbons, and regular olefins (ethylene, propylene) could remove oxygen contaminants from 2,3,3,3-tetrafluoropropene.

In other embodiments, a stored fresh HFO-1234yf or HFO-1234yf blend composition which includes a stabilizer is passed through a filter capable of removing the stabilizer from the HFO-1234yf or HFO-1234yf blend composition, and provide a high purity HFO-1234yf or HFO-1234yf blend composition which is charged to the refrigerant equipment and systems described herein, which circulated compositions can pass through absorbent filter bed, such as silica gel which is capable of removing inhibitors, their oxidation derivatives, as well as water to reduce potential corrosion in the system.

Another embodiment of the invention includes a refrigerant charging kit comprising a sealed stabilized fluoroolefin containing composition in a cannister, comprising HFO-1234yf and HFO-1234ze, optionally at least one hydrofluorocarbon selected from HFC-32, HFC-125, HFC-134a, HFC-152a, HFC-236fa and HFC-227ea, and optionally carbon dioxide, and a refrigerant charging kit comprising a sealed stabilized fluoroolefin composition containing refrigerant cannister, said composition comprising at least HFO-1234yf as a refrigerant component and up to 0.5 weight percent of an oligomer inhibitor comprising at least one of d-limonene, l-limonene, β-pinene, α-pinene, α-terpinene, β-terpinene, γ-terpinene, and δ-terpinene, and a tube for connecting a discharge end of the refrigerant cannister to a valve of a refrigerant circuit. In certain embodiments, any of the above-mentioned lubricants can be included the stabilized refrigerant blend. Thus, the refrigerant charging kit can include any of the disclosed refrigerant blends which have been stabilized, but without a lubricant.

Injector kit embodiments of the invention are provided with fittings adapted for connecting a stabilizer containing lubricant to refrigeration equipment, including not limited to,
a. a cannister filled with a POE lubricant and up to 0.5 wt. % d-limonene.
b. a cannister filled with a POE lubricant and up to 0.5 wt. % I-limonene,
c. a cannister filled with a POE lubricant and up to 0.5 wt. % β-pinene,
d. a cannister filled with a POE lubricant and up to 0.5 wt. % α-pinene,
e. a cannister filled with a POE lubricant and up to 0.5 wt. % α-terpinene,
f. a cannister filled with a POE lubricant and up to 0.5 wt. % β-terpinene,
g. a cannister filled with a POE lubricant and up to 0.5 wt. % γ-terpinene,
h. a cannister filled with a POE lubricant and up to 0.5 wt. % δ-terpinene,
i. a cannister filled with a POE lubricant and up to 0.5 wt. % ethane,
j. a cannister filled with a POE lubricant and up to 0.5 wt. % propane,
k. a cannister filled with a POE lubricant and up to 0.5 wt. % cyclopropane,
l. a cannister filled with a POE lubricant and up to 0.5 wt. % propylene,
m. a cannister filled with a POE lubricant and up to 0.5 wt. % butane,
n. a cannister filled with a POE lubricant and up to 0.5 wt. % butene,
o. a cannister filled with a POE lubricant and up to 0.5 wt. % isobutene,
p. a cannister filled with a POE lubricant and up to 0.5 wt. % isobutene,
q. a cannister filled with a POE lubricant and up to 0.5 wt. % methylbutane,
r. a cannister filled with a POE lubricant and up to 0.5 wt. % meta-xylene,
s. a cannister filled with a POE lubricant and up to 0.5 wt. % ortho- xylene,
t. a cannister filled with a POE lubricant and up to 0.5 wt. % para- xylene,
u. a cannister filled with a mineral oil lubricant and up to 0.5 wt. % d-limonene,
v. a cannister filled with a mineral oil lubricant and up to 0.5 wt. % I-limonene,
w. a cannister filled with a mineral oil lubricant and up to 0.5 wt. % β-pinene,
x. a cannister filled with a mineral oil lubricant and up to 0.5 wt. % α-pinene,
y. a cannister filled with a mineral oil lubricant and up to 0.5 wt. % α-terpinene,
z. a cannister filled with a mineral oil lubricant and up to 0.5 wt. % β-terpinene,
aa. a cannister filled with a mineral oil lubricant and up to 0.5 wt. % γ-terpinene,
bb. a cannister filled with a mineral oil lubricant and up to 0.5 wt. % δ-terpinene,
cc. a cannister filled with a mineral oil lubricant and up to 0.5 wt. % ethane,
dd. a cannister filled with a mineral oil lubricant and up to 0.5 wt. % propane,
ee. a cannister filled with a mineral oil lubricant and up to 0.5 wt. % cyclopropane,
ff. a cannister filled with a mineral oil lubricant and up to 0.5 wt. % propylene,
gg. a cannister filled with a mineral oil lubricant and up to 0.5 wt. % butane,
hh. a cannister filled with a mineral oil lubricant and up to 0.5 wt. % butene,
ii. a cannister filled with a mineral oil lubricant and up to 0.5 wt. % isobutane,
jj. a cannister filled with a mineral oil lubricant and up to 0.5 wt. % isobutene,
kk. a cannister filled with a mineral oil lubricant and up to 0.5 wt. % 2 methylbutane,
II. a cannister filled with a mineral oil lubricant and up to 0.5 wt. % meta-xylene,
mm. a cannister filled with a mineral oil lubricant and up to 0.5 wt. % ortho-xylene,
nn. a cannister filled with a mineral oil lubricant and up to 0.5 wt. % para-xylene,
oo. a cannister filled with an alkylbenzene lubricant and up to 0.5 wt. % d-limonene,
pp. a cannister filled with an alkylbenzene lubricant and up to 0.5 wt. % I-limonene,
qq. a cannister filled with an alkylbenzene lubricant and up to 0.5 wt. % β-pinene,
rr. a cannister filled with an alkylbenzene lubricant and up to 0.5 wt. % α-pinene,
ss. a cannister filled with an alkylbenzene lubricant and up to 0.5 wt. % α-terpinene,
tt. a cannister filled with an alkylbenzene lubricant and up to 0.5 wt. % β-terpinene,
uu. a cannister filled with an alkylbenzene lubricant and up to 0.5 wt. % γ-terpinene,
vv. a cannister filled with an alkylbenzene lubricant and up to 0.5 wt. % δ-terpinene,
ww. a cannister filled with an alkylbenzene lubricant and up to 0.5 wt. % ethane,
xx. a cannister filled with an alkylbenzene lubricant and up to 0.5 wt. % propane,
yy. a cannister filled with an alkylbenzene lubricant and up to 0.5 wt. % cyclopropane,
zz. a cannister filled with an alkylbenzene lubricant and up to 0.5 wt. % propylene,
aaa. a cannister filled with an alkylbenzene lubricant and up to 0.5 wt. % butane,
bbb. a cannister filled with an alkylbenzene lubricant and up to 0.5 wt. % butene,
ccc. a cannister filled with an alkylbenzene lubricant and up to 0.5 wt. % isobutene,
ddd. a cannister filled with an alkylbenzene lubricant and up to 0.5 wt. % isobutane,
eee. a cannister filled with an alkylbenzene lubricant and up to 0.5 wt. % 2 methylbutane,
fff. a cannister filled with an alkylbenzene lubricant and up to 0.5 wt. % meta-xylene,
ggg. a cannister filled with an alkylbenzene lubricant and up to 0.5 wt. % ortho- xylene,
hhh. a cannister filled with an alkylbenzene lubricant and up to 0.5 wt. % para-xylene.

Injector kit embodiments of the invention are provided with fittings adapted for connecting a stabilizer containing refrigerant composition, including not limited to,
a. a cannister filled with a POE lubricant and up to 0.5 wt. % d-limonene,
b. a cannister filled with a POE lubricant and up to 0.5 wt. % I-limonene,
c. a cannister filled with a POE lubricant and up to 0.5 wt. % β-pinene,
d. a cannister filled with a POE lubricant and up to 0.5 wt. % α-pinene,
e. a cannister filled with a POE lubricant and up to 0.5 wt. % α-terpinene,
f. a cannister filled with a POE lubricant and up to 0.5 wt. % β-terpinene,
g. a cannister filled with a POE lubricant and up to 0.5 wt. % γ-terpinene,
h. a cannister filled with a POE lubricant and up to 0.5 wt. % δ-terpinene,
i. a cannister filled with a POE lubricant and up to 0.5 wt. % ethane,
j. a cannister filled with a POE lubricant and up to 0.5 wt. % propane,
k. a cannister filled with a POE lubricant and up to 0.5 wt. % cyclopropane,
I. a cannister filled with a POE lubricant and up to 0.5 wt. % propylene,
m. a cannister filled with a POE lubricant and up to 0.5 wt. % butane,
n. a cannister filled with a POE lubricant and up to 0.5 wt. % butene,
o. a cannister filled with a POE lubricant and up to 0.5 wt. % isobutene,
p. a cannister filled with a POE lubricant and up to 0.5 wt. % methylbutane,
q. a cannister filled with a POE lubricant and up to 0.5 wt. % meta-xylene,
r. a cannister filled with a POE lubricant and up to 0.5 wt. % ortho- xylene,
s. a cannister filled with a POE lubricant and up to 0.5 wt. % para- xylene,
t. a cannister filled with a mineral oil lubricant and up to 0.5 wt. % d-limonene,
u. a cannister filled with a mineral oil lubricant and up to 0.5 wt. % I-limonene,
v. a cannister filled with a mineral oil lubricant and up to 0.5 wt. % β-pinene,
w. a cannister filled with a mineral oil lubricant and up to 0.5 wt. % α-pinene,
x. a cannister filled with a mineral oil lubricant and up to 0.5 wt. % α-terpinene,
y. a cannister filled with a mineral oil lubricant and up to 0.5 wt. % β-terpinene,
z. a cannister filled with a mineral oil lubricant and up to 0.5 wt. % γ-terpinene,
aa. a cannister filled with a mineral oil lubricant and up to 0.5 wt. % δ-terpinene,
bb. a cannister filled with a mineral oil lubricant and up to 0.5 wt. % ethane,
cc. a cannister filled with a mineral oil lubricant and up to 0.5 wt. % propane,
dd. a cannister filled with a mineral oil lubricant and up to 0.5 wt. % cyclopropane,
ee. a cannister filled with a mineral oil lubricant and up to 0.5 wt. % propylene,
ff. a cannister filled with a mineral oil lubricant and up to 0.5 wt. % butane,
gg. a cannister filled with a mineral oil lubricant and up to 0.5 wt. % butene,
hh. a cannister filled with a mineral oil lubricant and up to 0.5 wt. % isobutene,
ii. a cannister filled with a mineral oil lubricant and up to 0.5 wt. % 2 methylbutane,
jj. a cannister filled with a mineral oil lubricant and up to 0.5 wt. % meta-xylene,
kk. a cannister filled with a mineral oil lubricant and up to 0.5 wt. % ortho-xylene,
II. a cannister filled with a mineral oil lubricant and up to 0.5 wt. % para-xylene,
mm. a cannister filled with an alkylbenzene lubricant and up to 0.5 wt. % d-limonene,
nn. a cannister filled with an alkylbenzene lubricant and up to 0.5 wt. % I-limonene,
oo. a cannister filled with an alkylbenzene lubricant and up to 0.5 wt. % β-pinene,
pp. a cannister filled with an alkylbenzene lubricant and up to 0.5 wt. % α-pinene,
qq. a cannister filled with an alkylbenzene lubricant and up to 0.5 wt. % α-terpinene,
rr. a cannister filled with an alkylbenzene lubricant and up to 0.5 wt. % β-terpinene,
ss. a cannister filled with an alkylbenzene lubricant and up to 0.5 wt. % γ-terpinene,
tt. a cannister filled with an alkylbenzene lubricant and up to 0.5 wt. % δ-terpinene,
uu. a cannister filled with an alkylbenzene lubricant and up to 0.5 wt. % ethane,
vv. a cannister filled with an alkylbenzene lubricant and up to 0.5 wt. % propane,
ww. a cannister filled with an alkylbenzene lubricant and up to 0.5 wt. % cyclopropane,
xx. a cannister filled with an alkylbenzene lubricant and up to 0.5 wt. % propylene,
yy. a cannister filled with an alkylbenzene lubricant and up to 0.5 wt. % butane,
zz. a cannister filled with an alkylbenzene lubricant and up to 0.5 wt. % butene,
aaa. a cannister filled with an alkylbenzene lubricant and up to 0.5 wt. % isobutane,
bbb. a cannister filled with an alkylbenzene lubricant and up to 0.5 wt. % isobutene,
ccc. a cannister filled with an alkylbenzene lubricant and up to 0.5 wt. % 2 methylbutane,
ddd. a cannister filled with an alkylbenzene lubricant and up to 0.5 wt. % meta-xylene,
eee. a cannister filled with an alkylbenzene lubricant and up to 0.5 wt. % ortho- xylene, or
fff. a cannister filled with an alkylbenzene lubricant and up to 0.5 wt. % para-xylene.

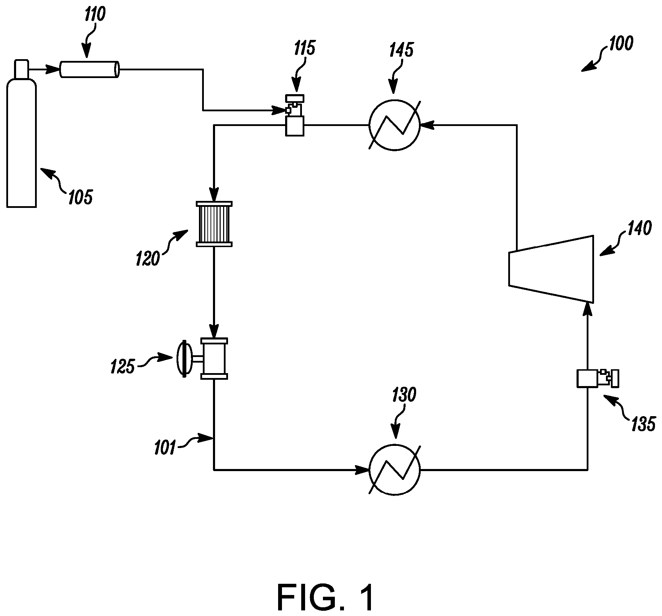

Embodiments of the invention will now be described with reference to the non-limiting Figures. **Fig.** 1 illustrates a first system embodiment **100** for adding stabilizer to the HFO-1234yf or HFO-1234yf blends described herein. The valved cannister **105** contains HFO-1234yf or HFO-1234yf blends and is in fluid communication with the inlet side of stabilizer cartridge **110.** Upon opening valve **115,** the pressurized HFO-1234yf or HFO-1234yf blend flows through the cartridge **110** and picks up inhibitor to provide an HFO-1234yf composition containing up to 0.5 weight percent of the inhibitor, between 0.001 and 0.1 weight percent inhibitor, between 0.001 and 0.2 weight percent inhibitor; between 0.001 and 0.3 weight percent inhibitor, between 0.001 and 0.4 weight percent inhibitor, between 0.001 and 0.01 weight percent inhibitor; between 0.001 and 0.02 weight percent inhibitor; between 0.001 and 0.03 weight percent inhibitor; between 0.001 and 0.04 weight percent inhibitor; between 0.001 and 0.05 weight percent inhibitor; between 0.01, 0.02, 0.03, 0.04, 0.05, 0.06, 0.07, 0.08, 0.09 and 0.1 weight percent inhibitor; and between 0.01 and 0.05 weight percent inhibitor, and all values and ranges therebetween.

The refrigeration circuit **101** generally includes, in seriatim, high side service valve **115,** filter/drier **120,** a device **125** such as expansion valve, evaporator **130,** low side service valve **135,** compressor **140** and condenser **145** when a change in refrigerant phase is involved. However, less components would be involved if the refrigerant circuit does not rely on changing the phase of the refrigerant to transfer energy. The order of components **115, 120, 125, 135, 140, 145** can be arranged as shown, but can include additional components where necessary. Once stabilized, 1234yf refrigerant exits the cartridge **110** and is metered/charged into the refrigeration circuit **101** through the high side service valve **115.** The stabilized refrigerant then flows sequentially through filter/drier **120,** device such as expansion valve **125,** evaporator **130,** low side service valve **135,** and compressor **140,** and the compressed stabilized refrigerant is then passed through heat exchanger/condenser **145** and then through valve **115** and recirculated. Alternatively, liquid refrigerant could also be throttled through the low-side service valve **135** arranged upstream from the compressor. The cartridge **110** includes at least one of various oligomer or polymer inhibiting stabilizers, discuss above, including but not limited to d-limonene, I-limonene, β-pinene, α-pinene, α-terpinene, β-terpinene, γ-terpinene, and δ-terpinene, including mixtures of two or more. Refrigeration circuit **101** may be a new, existing or retrofitted system, requiring a fresh charge of refrigerant, additional refrigerant, replacement refrigerant or a starting supply refrigerant, etc.

Although a single 'stabilizer' cartridge **110** or filter/drier **120** is shown, multiple cartridges **110** containing the same or different inhibitors, and/or multiple filter/driers **120,** containing different filter media, arranged in series or parallel can be used. Two stabilizer cartridges can be serially/sequentially arranged with a by-pass line (not shown) so that refrigerant flowing from tank **105** may flow through the first cartridge **110** but by-pass a second stabilizer cartridge. Alternatively, refrigerant from tank **105** could flow through the first cartridge **110** and then by-pass the second cartridge.

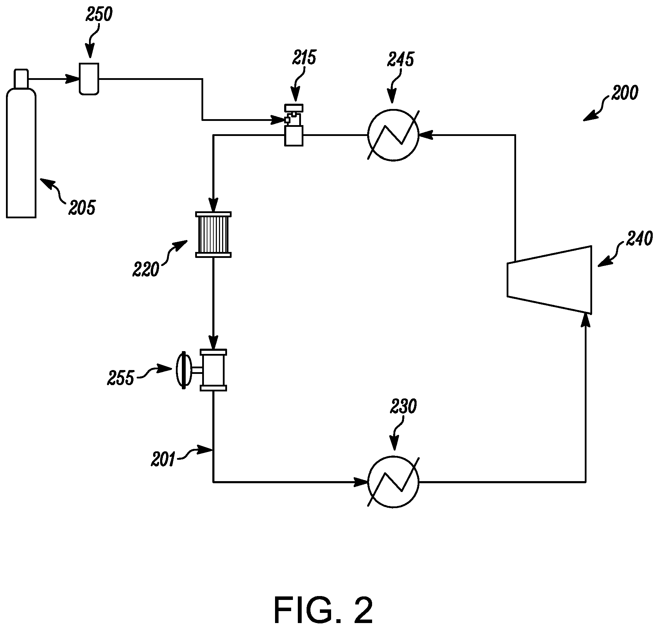

**Fig. 2** illustrates a second system embodiment **200** for removing the stabilizer of a stabilized HFO-1234yf or stabilized HFO-1234yf blend composition refrigerant to provide a high purity HFO-1234yf or HFO-1234yf blend compositions, prior to charging a purified refrigerant to a refrigeration circuit. Depicted here is the refrigerant cylinder/cannister charging liquid refrigerant into the high-side service valve **215.** Alternatively, liquid refrigerant could also be throttled through the low-side service valve (not shown) arranged upstream from the compressor. In this case, a valve cannister **205** will contain stabilized HFO-1234yf, with or without HFO-1234ze, optionally containing additional refrigerant components, and will be arranged in fluid communication with the inlet side of stabilizer removing column/filter **250 as** described herein, e.g., a silica bed that can remove the inhibitors described herein **The** refrigeration circuit **201** comprises in seriatim, service valve **215,** filter **220,** expansion device **255,** e.g., an expansion valve, evaporator **230,** compressor **240** and heat exchanger/condenser **245.** Upon opening the cannister valve (not shown), the liquid HFO-1234yf or HFO-1234yf blends containing, e.g. HFO-1234ze, refrigerant flows to and through the filter **250** and removes the stabilizer. Although a single filter is shown, multiple filters, in series or parallel, including a by-pass line (not shown) may also be used.

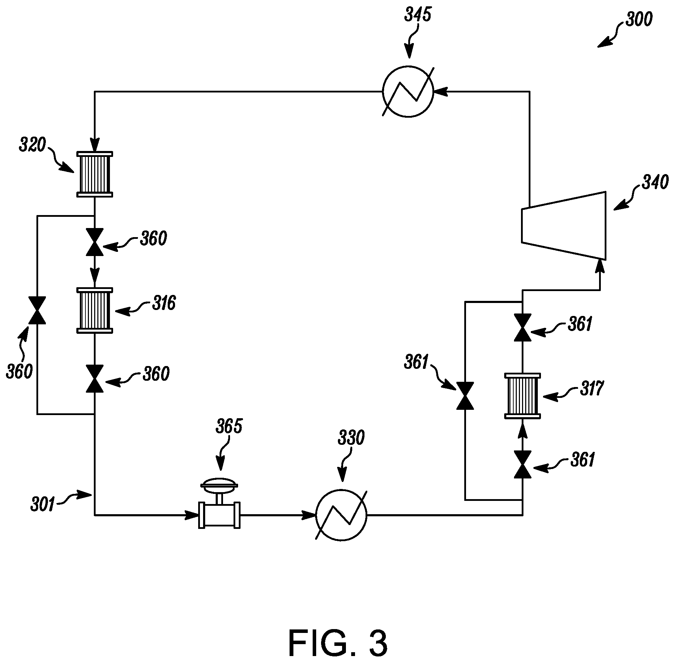

**Fig. 3** illustrates an embodiment **300** using a stand-alone filter for O₂ removal in a system and/or using a polymer/filter in the compressor suction line. Valved by-pass lines are shown around both the O₂ and the polymer filter for practical removal and replacement in a system, as well as, to depict the concept that they may only be needed in certain situations. Also, the refrigeration circuit **301** could be provided with a refrigerant cylinder (not shown) for charging liquid into high-side service valve (not shown) downstream of heat exchanger/condenser **345.** Alternatively, liquid HFO-1234yf or HFO-1234yf blends containing, e.g. HFO-1234ze could also be throttled and a low-side service valve could be utilized (not shown). Alternatives include integrating the filter/drier **320** and O₂ filter **316** into one package (not shown), the polymer filter **317** being moved to upstream of the expansion device, such as the device, e.g., valve **365,** or all three filters **320, 316** and **317** being integrated into one package and located upstream of the expansion device **365.** As shown, in **FIG. 3****,** refrigeration circuit **301** comprises in seriatim filter/drier **320** and O₂ filter **316** with valving **360** and an optional controller (not shown) for controlling fluid flow, an expansion device such as valve **365,** evaporator **330,** polymer filter **317** with valving **361** and an optional controller (not shown) for controlling fluid flow, compressor **340** and heat exchanger/condenser **345.**

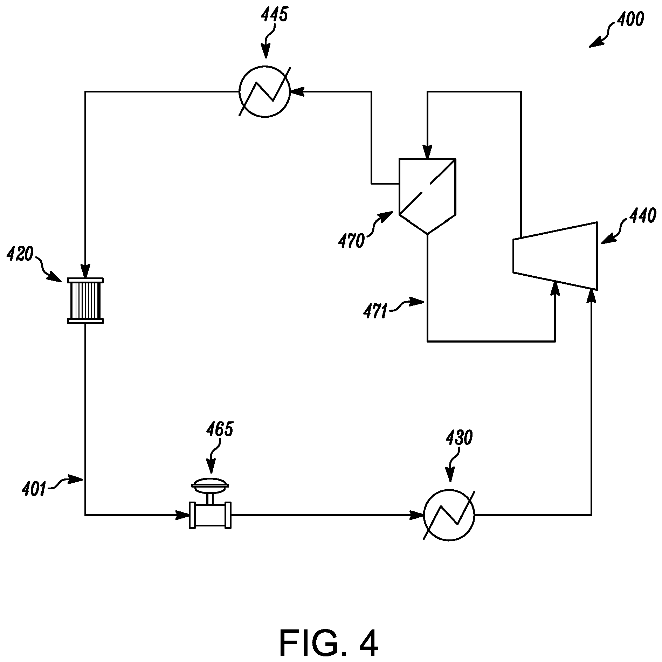

**Fig. 4** illustrates an embodiment **400** including an integrated oil separator/polymer filter **470** for oil within the return line **471** returning oil to the compressor **440. The** refrigeration circuit **401** comprises in seriatim filter/drier **420, a** device **465** such as expansion valve, evaporator **430,** compressor **440,** integrated oil separator/polymer filter **470** and return line **471,** and heat exchanger/condenser **445.**

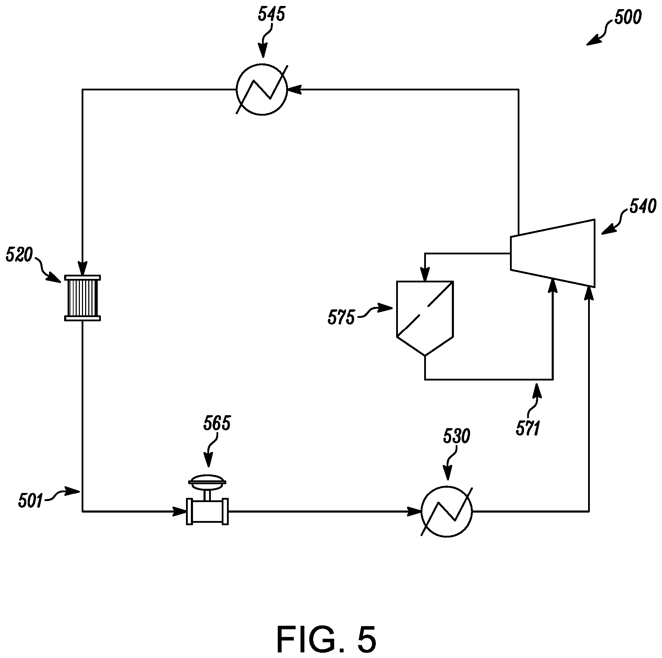

**Fig. 5** is similar to **FIG. 4** but illustrates an embodiment **500** using an integrated oil/polymer filter **575** for the flow of compressor oil from the compressor oil sump to the compressor lubrication surfaces via shaft driven or and external oil pump. The refrigeration circuit **501** comprises in seriatim filter/drier **520,** expansion device such as valve **565,** evaporator **530,** compressor **540,** integrated oil separator/polymer filter **575** and return line **571,** and heat exchanger/condenser **545.**

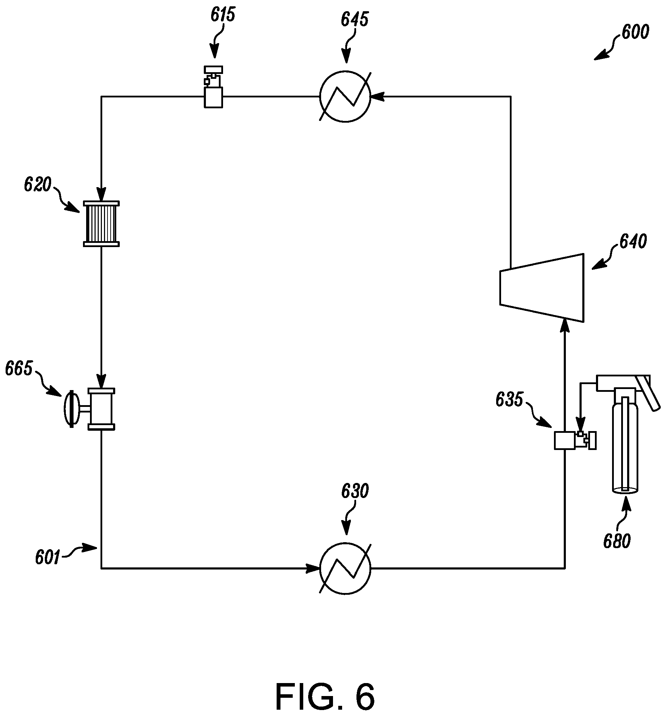

**Fig. 6** illustrates an embodiment **600** of an integrated system including refrigeration circuit **601** with a stabilizer injection kit **680** for systems running on OpteonTM products, or R448A, without stabilizer or otherwise dosing more stabilizer into a system that is already charged with refrigerant. Injection would be charged into the system via the low-side service valve **635,** or any other suitable location.

The refrigeration circuit **601** comprises, in seriatim, filter/drier **620,** device e.g. expansion valve **665,** evaporator **630,** the low-side service valve **635,** stabilizer injection kit **680,** compressor **640,** heat exchanger **645** and service valve **615.** The kit **680** includes one of a stabilized lubricant, stabilized HFO-1234yf or HFO-1234yf blends containing, e.g. HFO-1234ze, refrigerant and stabilized refrigerant/lubricant mixtures, where the stabilizing agent is selected from d-limonene, I-limonene, β-pinene, α-pinene, α-terpinene, β-terpinene, γ-terpinene, and δ-terpinene, and mixtures of two or more thereof, or ethane, propane, cyclopropane, propylene, a cannister filled with an alkylbenzene lubricant and up to 0.5 wt. % isobutene, 2-methylbutane, meta-, ortho- or para- xylene, one of alpha, -methyl styrene; alpha, 2-imethyl styrene; alpha, 3-dimethyl styrene; or alpha, 4-dimethyl styrene in in amounts effective to reduce or eliminate oligomerization/polymerization of the HFO-1234yf component of the refrigerant, e.g., 0.02 to 0.3 weight percent.

In certain embodiments disclosed herein at least a) one service valve adapted to charge the refrigerant circuit with a fluoroolefin refrigerant composition; b)a stabilized refrigerant charging subsystem; a purified refrigerant charging subsystem optionally contained an air/oxygen detector; d) a subsystem for removing oxygen and/or oxidizing compounds including a deoxygenating agent, optionally responsive to the air/oxygen detector; e) a subsystem for separating oligomer/polymer; and f)an oligomer/polymer filter, may be added to existing seems as separate components or as an integrated system.

### Examples 1-4

An Inconel tube^{®} (0.5-inch OD, 15-inch length, 0.34 in wall thickness) was filled with 8 cc of CuO (40% by weight) on Al₂O₃. The catalyst was reduced by 50 sccm H₂/N2 (50% H₂) in a Lindberg furnace to 175°C for 8 hours. After the reactor was cooled to room temperature, CF₃CF=CH₂ (HFO-1234yf) containing different concentrations of air was fed at 10 -20 sccm (standard cubic centimeters per minute). Over the course of the run, the air concentration is measure by GC to show O₂ concentration is below 5 ppm.

| **Example** | **Air concentration (ppm)** | **O₂ concentration after treatment (ppm)** |
|---|---|---|
| 1 | 1,000 | <5 |
| 2 | 2,000 | <5 |
| 3 | 3,000 | <5 |
| 4 | 6,000 | <5 |

### Examples 5-10

30 g HFO-1234yf containing various concentration of d-limonene was passed 20 g silica gel (200 mesh) or 50 mL mineral oil. GC showed the residual inhibitor content is less than 5 ppm.

| **Example** | **Absorbent** | **d-limonene Concentration before treatment** | **d-limonene concentration after treatment (ppm)** |
|---|---|---|---|
| 5 | silica gel | 100 | <5 |
| 6 | silica gel | 200 | <5 |
| 7 | silica gel | 400 | <5 |
| 8 | mineral oil | 100 | <5 |
| 9 | mineral oil | 200 | <5 |
| 10 | mineral oil | 400 | < 5 |

Although certain aspects, embodiments and principals have been described above, it is understood that this description is made only way of example and not as limitation of the scope of the invention or appended claims. The foregoing various aspects, embodiments and principals can be used alone and in combinations with each other.

The following represent preferred items of the present invention:
1. A refrigerant system comprising a refrigeration circuit for conveying a fluoroolefin refrigerant composition, the refrigerant circuit comprising at least one compressor, at least one expansion device, at least one evaporator, at least one condenser, at least one drier for removing moisture, and optionally at least one component selected from the group consisting of:
   a) at least one service valve configured to charge the refrigerant circuit with a fluoroolefin refrigerant composition;
   b) a stabilized refrigerant charging subsystem;
   c) a purified refrigerant charging subsystem, optionally contained an air/oxygen detector;
   d) a subsystem for removing oxygen and/or oxidizing compounds including a deoxygenating agent, optionally responsive to the air/oxygen detector;
   e) a subsystem for separating oligomer/polymer; and
   f) an oligomer/polymer filter.
2. The refrigerant system according to item 1, wherein the refrigeration circuit is a closed loop and contains the fluoroolefin refrigerant composition, the fluoroolefin refrigerant composition comprising:
   at least one of HFO-1234yf and HFO-1234ze,
   optionally at least one hydrofluorocarbon selected from the group consisting of HFC-32, HFC-125, HFC-134a, HFC-152a, HFC-236fa , E/Z-R-1132, and HFC-227ea, and optionally carbon dioxide.
3. The refrigerant system according to item 1, wherein the at least one drier for removing moisture is a single filter drier.
4. The refrigerant system according to item 1, wherein the at least one drier is a single drier containing an absorbent bed for removing moisture.
5. The refrigerant system according to item 1, wherein the at least one drier is a single column housing a filter section and a drier section.
6. The refrigerant system according to item 1, wherein the refrigeration circuit includes, first and second service valves, and a stabilized refrigerant charging subsystem including a self-contained contained pressurized source of a fluoroolefin refrigerant composition, a flow-through cartridge, and an oligomerization/polymerization inhibitor for stabilizing the fluoroolefin refrigerant composition, and wherein said flow-through cartridge has an outlet connected to and in flow communication with a high side of said service valve for charging said circuit with stabilized fluoroolefin refrigerant.
7. The refrigeration system according to item 1, wherein the refrigeration circuit include a first service valve, a purified refrigerant charging subsystem including a self-contained pressurized source of stabilizer containing fluoroolefin refrigerant composition in flow communication with a separating column for removing the stabilizers and providing a purified, stabilizer-free fluoroolefin refrigerant composition, said column having an outlet connected to and in flow communication with a high side of said first service valve.
8. The refrigerant system according to item 1, wherein there is a single compressor with a discharge outlet connected to and in fluid communication a polymer separator.
9. The refrigerant system according to item 7, further comprising a second service valve and a subsystem for charging stabilized fluoroolefin refrigerant composition to a low side of said second service valve.
10. The refrigerant system according to item 1, wherein a plurality of moisture removing driers are serially arranged in flow communication with said circuit.
11. The refrigerant system according to item 1, wherein a plurality of moisture removing driers are arranged in-line and in flow communication with said circuit, and said circuit optionally including a valved by-pass for a second moisture removing drier.
12. A process for operating refrigerant equipment comprising:
   a) providing a fluoroolefin refrigerant composition and optionally a lubricant, the fluoroolefin refrigerant composition comprising:
      at least one of HFO-1234yf and HFO-1234ze,
      optionally at least one hydrofluorocarbon selected from the group consisting of HFC-32, HFC-125, HFC-134a, HFC-152a, 236fa, E/Z-R-1132, R-1132a, and HFC-227ea, and
      optionally carbon dioxide;
   b) discharging and passing said fluoroolefin refrigerant composition through a column housing a supported oligomerization/polymerization inhibiting agent, said oligomerization/polymerization inhibiting agent comprising at least one member selected from the group consisting of a limonene, α-terpinene, and α-tocopherol, and mixtures of two or more thereof;
   c) adding up to 0.5 weight percent of said oligomerization/polymerization inhibiting agent to the fluoroolefin refrigerant composition to form a fluoroolefin stabilized feed which is stabilized against oligomerization and/or polymerization; and
   d) charging the refrigerant equipment with the fluoroolefin stabilized feed of c).
13. The process according to item 12, wherein said refrigerant equipment includes a refrigerant circuit and step d) comprises directly charging the refrigerant circuit with the fluoroolefin stabilized feed of c).
14. The process according to item 12, wherein the column is a cartridge.
15. The process according to item 13, wherein the cartridge contains an inert material supporting the oligomerization/polymerization inhibiting agent.
16. The process according to item 13, wherein the oligomerization/polymerization inhibiting agent is in liquid form and the cartridge is configured to pass the fluoroolefin refrigerant composition under motive force of the fluoroolefin refrigerant composition to add up to 0.5 weight percent of said oligomerization/polymerization inhibiting agent to the fluoroolefin refrigerant composition.
17. The process according to item 16, further comprising circulating the charged fluoroolefin stabilized feed in the refrigerant equipment.
18. The process according to any of items 16 or 17, wherein the refrigeration equipment comprises a refrigeration circuit through which the fluoroolefin stabilized feed is continually circulated, the process further comprising at least one of the following steps:
   a) removing moisture from fluoroolefin stabilized feed in the circuit;
   b) drying the fluoroolefin stabilized feed in the circuit;
   c) removing oxygen and oxidizing compounds capable of initiating fluoroolefin oligomerization and/or polymerization in the fluoroolefin stabilized feed in the circuit, optionally in response to an air/oxygen detector associated with a vapor space in the refrigeration circuit or fluoroolefin stabilized feed; and
   d) removing one of oligomerization-polymerization products and by-products from the fluoroolefin stabilized feed in the circuit.
19. The process according to item 18, the process comprising removing moisture from the fluoroolefin stabilized feed in the circuit.
20. The process according to item 12, wherein the oligomerization/polymerization inhibiting agent comprises a member selected from the group consisting of limonene, α-terpinene, and α-tocopherol, and mixtures of two or more thereof.
21. A process according to item 12, wherein the fluoroolefin refrigerant composition comprises:
   i. a fluoroolefin comprising at least HFO-1234yf, and
   ii. optionally an HFC comprising at least one of HFC-32, HFC- 125 and HFC-134a.
22. A method of maintaining the integrity of a refrigerant in a system having at least a refrigeration circuit, the method comprising:
   - providing at least one of (1) a stabilized source of an HFO-1234yf and HFO-1234ze refrigerant composition, or (2) an unstabilized source of an HFO-1234yf and HFO-1234ze refrigerant composition;
   - purifying (1) by removing any stabilizers from the HFO-1234yf and HFO-1234ze refrigerant composition, or stabilizing (2) by adding an effective amount of an oligomerization inhibitor to the unstabilized HFO-1234yf and HFO-1234ze refrigerant composition, and subsequently charging the refrigeration circuit with (1) or (2);
   - circulating refrigerant in the charged refrigeration circuit, and, optionally
   - removing one of moisture, oxygen and oligomer products and by-products from the charged refrigeration circuit.
23. A method of maintaining the integrity of a refrigerant in a system having at least a refrigeration circuit, the method comprising:
   - continuously circulating a fluoroolefin-containing refrigerant composition in the refrigeration circuit; and
   - passing the circulating fluoroolefin-containing refrigerant composition though at least one moisture removing drier, at least one oxygen removing column and at least one oligomer or polymer product or by-product filter/separator.
24. The method of item 23, wherein the fluoroolefin-containing refrigerant composition comprises at least one of HFO-1234yf and HFO-1234ze; optionally at least one hydrofluorocarbon selected from the group consisting of HFC-32, HFC-125, HFC-134a, HFC-152a, 236fa and HFC-227ea; and optionally carbon dioxide.
25. The method of item 23, wherein the system is charged with a stabilized source of HFO-1234yf and HFO-1234ze tetrafluoropropenes, and the stabilizer inhibits the tetrafluoropropenes from oligomerizing/polymerizing.
26. The process according to item 23, wherein passing the circulating fluoroolefin-containing refrigerant composition through the moisture removing drier and the oxygen removing column occurs upstream from a compressor in the refrigerant circuit.
27. The process according to item 26, wherein a discharge from the compressor passes through the oligomer or polymer product or by-product separator/filter.
28. A refrigeration system comprising:
   a) a pressurized source of a fluoroolefin comprising at least 2,3,3,3-tetrafluoropropene;
   b) a refrigerant circuit configured to circulate a refrigerant and comprising a first in-line charging valve;
   c) a first flow line providing fluid-controlled communication between said pressurized source and a flow-through inhibitor cartridge;
   d) a second flow line providing fluid-controlled communication between said flow-through inhibitor cartridge and a high side of the first in-line charging valve;
   e) optionally, at least one or more in-line flow-through oxygen removing columns housing a deoxygenation agent capable of removing oxygen but not cleaving a C-F bond of the fluoroolefin; and
   f) optionally, an inline inhibitor removal column in said first flow line.
29. The system of item 28, wherein the pressurized source comprises HFO-1234yf and HFO-1234ze; optionally at least one hydrofluorocarbon selected from the group consisting of HFC-32, HFC-125, HFC-134a, HFC-152a, HFC-236fa and HFC-227ea; and optionally carbon dioxide.
30. A refrigerant charging kit comprising:
   a) a sealed fluoroolefin containing refrigerant cannister comprising HFO-1234yf and HFO-1234ze; optionally at least one hydrofluorocarbon selected from the group consisting of HFC-32, HFC-125, HFC-134a, HFC-152a, HFC-236fa and HFC-227ea; and optionally carbon dioxide;
   b) a packaged cartridge filled with an oligomer inhibitor;
   c) a first tube configured to connect a discharge end of the refrigerant cannister to an inlet end of the packaged cartridge; and
   d) a second tube configured to connect an outlet end of the packaged cartridge to a valve of a refrigerant circuit.
31. The refrigeration system according to item 28, wherein the inhibitor agent comprises at least one member selected from the group consisting of d-limonene, I-limonene, α-pinene, β-pinene, α-terpinene, β-terpinene, γ-terpinene, and δ-terpinene, and mixtures of two or more styrenes, in an effective amount of about 0.02 to about 0.3 ppm.
32. The process according to item 12, wherein the inhibiting agent comprises at least one member selected from the group consisting of d-limonene, I-limonene, α-pinene, β-pinene, α-terpinene, β-terpinene, γ-terpinene, and δ-terpinene, and mixtures of two or more styrenes, in an amount of about 0.02 to about 0.3 ppm.
33. The refrigeration system according to item 28, wherein the inhibitor agent comprises at least one member selected from the group consisting of ethane, propane, cyclopropane, propylene, butane, butene, isobutane, isobutene, 2-methylbutane, meta-, ortho- or para- xylene, one of alpha, -methyl styrene; alpha, 2-dimethyl styrene; alpha, 3-dimethyl styrene; and alpha, 4-dimethyl styrene, in an effective amount of about 0.02 to about 0.3 ppm.
34. The process according to item 12, wherein the inhibiting agent comprises at least one member selected from the group consisting of ethane, propane, propylene, butane, butene, isobutane, isobutene, 2-methylbutane, meta-, ortho- or para- xylene, one of alpha, -methyl styrene; alpha, 2-dimethyl styrene; alpha, 3-dimethyl styrene; and alpha, 4-dimethyl styrene in an amount of about 0.02 to about 0.3 ppm.
35. A refrigerant charging kit comprising a sealed stabilized fluoroolefin composition containing refrigerant cannister, comprising HFO-1234yf and HFO-1234ze, optionally at least one hydrofluorocarbon selected from the group consisting of HFC-32, HFC-125, HFC-134a, HFC-152a, R-236fa and HFC-227ea, and optionally carbon dioxide.
36. A refrigerant charging kit comprising:
   a sealed stabilized fluoroolefin composition containing refrigerant cannister, said composition comprising at least HFO-1234yf as a refrigerant component and up to 0.5 weight percent of an oligomer inhibitor comprising at least one of d-limonene, I-limonene, β-pinene, α-pinene, α-terpinene, β-terpinene, γ-terpinene, and δ-terpinene, and mixtures of two or more thereof; and
   a tube configured to connect a discharge end of the refrigerant cannister to a valve of a refrigerant circuit.
37. A refrigerant charging kit comprising:
   a sealed stabilized fluoroolefin composition containing refrigerant cannister, said composition comprising at least HFO-1234yf as a refrigerant component and less than 0.5 weight percent of an oligomer inhibitor comprising at least one ethane, propane, cyclopropane, propylene, butane, butene, isobutene, 2-methylbutane, meta-, ortho- or para- xylene, one of alpha, -methyl styrene; alpha, 2-dimethyl styrene; alpha, 3-dimethyl styrene; or alpha, 4-dimethyl styrene; and
   a tube configured to connect a discharge end of the refrigerant cannister to a valve of a refrigerant circuit.
38. A refrigerant charging kit comprising a cannister filled with a POE, mineral oil or alkylbenzene lubricant and less than 0.5 weight percent ethane, or propane, or cyclopropane, or propylene, or butane, or butene, or isobutane, or isobutene, or 2-methylbutane, or meta-, or ortho- or para- xylene; and a tube configured to connect a discharge end of the refrigerant cannister to a valve of a refrigerant circuit.
39. A refrigerant system comprising a refrigeration circuit for conveying a fluoroolefin refrigerant composition, the refrigerant system comprising:
   a) at least one drier for removing moisture, and optionally at least one of:
   b) at least one service valve configured to charge the refrigerant circuit with the fluoroolefin refrigerant composition;
   c) a stabilized refrigerant charging subsystem;
   d) a purified refrigerant charging subsystem optionally contained in an air/oxygen detector;
   e) a subsystem for removing oxygen and/or oxidizing compounds including a deoxygenating agent, optionally responsive to the air/oxygen detector;
   f) a subsystem for separating oligomer/polymer; and
   g) an oligomer/polymer filter.
40. Apparatus for adding to or integrating with a refrigerant system having a refrigerant circuit, the apparatus comprising at least one of:
   a) at least one service valve adapted to charge the refrigerant circuit with a fluoroolefin refrigerant composition;
   b) a stabilized refrigerant charging subsystem;
   c) a purified refrigerant charging subsystem optionally contained in an air/oxygen detector;
   d) a subsystem for removing oxygen and/or oxidizing compounds including a deoxygenating agent, optionally responsive to the air/oxygen detector;
   e) a subsystem for separating oligomer/polymer; and,
   f) an oligomer/polymer filter.
41. A transport service center comprising a system according to any one of items 1, 28 and 39.
42. A transport service center comprising an apparatus according to item 40.

## Claims

1. A method of maintaining the integrity of a refrigerant in a system having at least a refrigeration circuit, the method comprising:
• providing at least one of (1) a stabilized source of an HFO-1234yf and HFO-1234ze refrigerant composition, or (2) an unstabilized source of an HFO-1234yf and HFO-1234ze refrigerant composition;
• purifying (1) by removing any stabilizers from the HFO-1234yf and HFO-1234ze refrigerant composition, or stabilizing (2) by adding an effective amount of an oligomerization inhibitor to the unstabilized HFO-1234yf and HFO-1234ze refrigerant composition, and subsequently charging the refrigeration circuit with (1) or (2);
• circulating refrigerant in the charged refrigeration circuit, and, optionally
• removing one of moisture, oxygen and oligomer products and by-products from the charged refrigeration circuit.

2. The method according to claim 1, comprising removing of oxygen from the charged refrigeration circuit, preferably by passing the refrigerant through a column or bed of deoxygenation reagent at 20°C to 30°C.

3. The method according to claim 1 or 2, wherein the stabilizer is at least one of d-limonene, I-limonene, α-pinene, β-pinene, α-terpinene, β-terpinene, γ-terpinene, δ-terpinene, and mixtures thereof.

4. The method according to any one of claims 1 to 3, wherein the refrigerant composition further comprises i) HFO-Z/E-1225ye, ii) HFO-Z/E-1225ye and HFC-32, iii) HFO-Z/E-1225ye and HFC-134a, iv) HFO-Z/E-1225ye, HFC-134a and HFC-32, or v) HFO-Z/E-1225ye and HFC-125.

5. The method according to any one of claims 1 to 3, wherein the refrigerant composition further comprises i) R-134a, R-32 and R-125, ii) R-134a, iii) R-227ea, iv) R-236fa, or v) R-134.

6. The method according to any one of claims 1 to 3, wherein the refrigerant composition further comprises one or more hydrofluorocarbons selected from (i) HFC-32, (ii) HFC-125, (iii) HFC-134a, (iv) HFC-152a, (v) HFC-236fa and (vi) HFC-227ea.

7. The method according to claim 6, wherein the amount of the hydrofluorocarbon(s) ranges from 25 to 75, preferably from 30 to 60, and more preferably from 30 to 50 mole percent.

8. The method according to any one of claims 1 to 7, comprising:
• providing a stabilized source of an HFO-1234yf and HFO-1234ze refrigerant composition;
• purifying said composition by removing any stabilizers from the HFO-1234yf and HFO-1234ze refrigerant composition, and subsequently charging the refrigeration circuit with the purified composition;
• circulating refrigerant in the charged refrigeration circuit, and, optionally
• removing one of moisture, oxygen and oligomer products and by-products from the charged refrigeration circuit.

9. The method according to claim 8, wherein said purifying is carried out by passing the composition through an absorbent bed to remove the stabilizers, wherein the absorbent bed preferably comprises silica gel.

10. The method according to any one of claim 1 to 9, further comprising removing oxygen from the charged refrigeration circuit by means of an oxygen removal subsystem including one or more oxygen removal devices.

11. The method according to claim 10, wherein the oxygen removal device(s) are a tube or column, wherein the tube or column preferably contains a metal containing reducing reagent, ascorbate, or an oxygen scavenger selected from NaHSO₃, Na₂SO₃, Na₂S₂O₅, Na₂S₂O₃, Na₂S₂O₄; polyhydroxy benzene, Cr (II) salts, P(=O)H₂OM wherein M=alkaline metal, and alkaline earth metal.

12. A system for removing the stabilizer of a stabilized HFO-1234yf and HFO-1234ze refrigerant composition to provide a purified HFO-1234yf and HFO-1234ze refrigerant composition, prior to charging the HFO-1234yf and HFO-1234ze refrigerant composition to a refrigeration circuit (201), wherein the system comprises a valve cannister (205) containing stabilized HFO-1234yf and HFO-1234ze and optionally additional refrigerant components, arranged in fluid communication with the inlet side of a stabilizer removing column or filter (250), and wherein the refrigeration circuit (201) comprises in seriatim, a service valve (215), a filter (220), an expansion device (255), an evaporator (230), a compressor (240), and a heat exchanger/condenser (245).

13. The system according to claim 12, wherein the column or filter (250) comprises a silica bed.

14. The system according to claim 12 or 13, wherein the stabilizer is at least one of d-limonene, I-limonene, α-pinene, β-pinene, α-terpinene, β-terpinene, γ-terpinene, δ-terpinene, and mixtures thereof.

15. The system according to any one of claims 12 to 14, wherein the refrigerant composition further comprises
(i) HFO-Z/E-1225ye; HFO-Z/E-1225ye and HFC-32; HFO-Z/E-1225ye and HFC-134a; HFO-Z/E-1225ye, HFC-134a and HFC-32; or HFO-Z/E-1225ye and HFC-125, or
(ii) R-134a, R-32 and R-125; R-134a; R-227ea; R-236fa; or v) R-134, or
(iii) one or more hydrofluorocarbons selected from HFC-32, HFC-125, HFC-134a, HFC-152a, HFC-236fa and HFC-227ea, wherein the amount of the hydrofluorocarbon(s) preferably ranges from 25 to 75, more preferably from 30 to 60, and most preferably from 30 to 50 mole percent.
